(19) **Europäisches Patentamt**

**European Patent Office**

**Office européen des brevets**

(11) **EP 0 953 168 B1**

(12) **FASCICULE DE BREVET EUROPEEN**

| | |
|---|---|
| (45) Date de publication et mention de la délivrance du brevet: **12.02.2003 Bulletin 2003/07** | (51) Int Cl.7: **G05B 19/4097**, B25J 9/16, G06F 3/00 |
| (21) Numéro de dépôt: **98955654.3** | (86) Numéro de dépôt international: **PCT/FR98/02428** |
| (22) Date de dépôt: **13.11.1998** | (87) Numéro de publication internationale: **WO 99/026119 (27.05.1999 Gazette 1999/21)** |

(54) **DISPOSITIF ELECTRONIQUE DE TRAITEMENT DE DONNEES-IMAGE, POUR LA SIMULATION DU COMPORTEMENT DEFORMABLE D'UN OBJET**

ELEKTRONISCHE BILDDATENVERARBEITUNGSEINRICHTUNG ZUR SIMULATION DES VERFORMBAREN VERHALTENS EINES OBJEKTS

ELECTRONIC DEVICE FOR PROCESSING IMAGE-DATA, FOR SIMULATING THE BEHAVIOUR OF A DEFORMABLE OBJECT

| | |
|---|---|
| (84) Etats contractants désignés: **BE DE ES GB IT NL** | • **DELINGETTE, Hervé, Résidence Hadriana F-06600 Antibes (FR)** • **AYACHE, Nicholas F-06600 Nice (FR)** |
| (30) Priorité: **19.11.1997 FR 9714506** | |
| (43) Date de publication de la demande: **03.11.1999 Bulletin 1999/44** | (74) Mandataire: **Plaçais, Jean-Yves Cabinet Netter, 36, avenue Hoche 75008 Paris (FR)** |
| (73) Titulaire: **Inria Institut National de Recherche en Informatique et en Automatique 78153 Le Chesnay Cedex (FR)** | |
| (72) Inventeurs: • **COTIN, Stéphane, Résidence Flavia, Bâtiment 4 F-06600 Antibes (FR)** | (56) Documents cités: **WO-A-96/16389**    **WO-A-96/18942** **WO-A-96/30885**    **WO-A-97/19440** **WO-A-97/31300**    **GB-A- 2 298 931** **US-A- 5 389 865** |

## Description

L'invention concerne le domaine du traitement de données-image numériques d'un jeu représentatif d'une image tridimensionnelle (3D), pour la simulation du comportement déformable d'un objet.

L'invention s'applique plus particulièrement, mais de façon non exclusive, au traitement d'un jeu de données-image d'une image dite médicale.

Dans de nombreux domaines, il est très intéressant de pouvoir simuler des interventions d'un opérateur, à l'aide d'un (ou plusieurs) outil(s) connu(s), sur un (ou plusieurs) objet(s) déformable(s). On entend ici par intervention, aussi bien une manipulation, en vue par exemple d'un déplacement, qu'une transformation locale, comme par exemple, dans le cas d'une intervention chirurgicale, de type incision ou extraction d'une partie d'un organe.

La simulation consiste à afficher l'image d'un objet, et éventuellement de la région dans laquelle il se trouve habituellement, et la représentation d'un outil au moins dont le déplacement "virtuel", relativement à l'objet, est défini par une interface-utilisateur dont un ensemble-harnachement est manoeuvré par un opérateur, en vue de la simulation du maniement dudit outil. Afin de pouvoir simuler la réaction de l'objet sur l'outil, l'interface-utilisateur est capable de générer un retour de force, conformément aux réactions de l'outil. On entend par force de réaction d'un objet le retour de force.

Dans les dispositifs connus, un module de réaction permet de déterminer cette force de réaction de l'objet à partir d'une déformation estimée de cet objet. Cette déformation s'obtient à l'aide d'un module de forces internes et d'un module de rafraîchissement d'image. Le module de forces internes est capable, sur désignation d'un objet 3D apparaissant dans un jeu de données-image, d'établir un champ de forces internes, représentatif de la déformation de l'objet, entre des noeuds d'un maillage volumique fonction d'un maillage surfacique de cet objet, à partir d'une loi de déformation et d'une action définie par l'interface-utilisateur et représentative d'une manoeuvre de l'outil.

Le module de rafraîchissement permet alors de calculer de nouvelles données-image de l'objet, en présence des déformations estimées, complétées de la représentation de l'outil. Ces nouvelles données-image qui forment la nouvelle image de l'objet, et éventuellement celle de la région qui l'entoure, sont alors affichées sur un dispositif de visualisation, de sorte que l'opérateur puisse voir en temps réel le résultat de la manipulation de l'ensemble-harnachement qui simule l'action sur l'outil.

Un tel dispositif doit permettre la formation d'un opérateur ou bien la mise au point de nouvelles techniques d'intervention sur l'objet. Dans un domaine tel que la chirurgie, et plus particulièrement encore dans le domaine de la chirurgie laparoscopique, ce type de dispositif peut permettre de sauver des vies humaines. Pour ce faire, il est impératif que la simulation permette de reproduire le plus fidèlement possible le geste de l'opérateur (ou en d'autres termes son action sur un outil, ici virtuel). Cela nécessite un traitement en temps réel des données-image couplé à une restitution des forces induites par l'objet en réponse à la déformation générée par "l'outil".

Or, du fait des techniques de calcul utilisées par les dispositifs connus, l'estimation des forces internes nécessite des temps de calcul importants incompatibles avec une simulation dynamique continue. En d'autres termes, les dispositifs actuels ne permettent pas de visualiser, de façon continue pour un oeil humain, la totalité de l'action d'un outil sur un objet déformable.

Par ailleurs, aucun dispositif actuel ne permet de simuler en temps réel une action de type incision, ou déchirement, ou bien encore retrait de matière d'un objet déformable.

La présente invention a donc pour but de résoudre tout ou partie des inconvénients précités dans le domaine du traitement de données-image numériques d'objet 3D.

Elle propose à cet effet un dispositif électronique de traitement de données-image du type décrit dans l'introduction, dans lequel, d'une part, on prévoit un module de "collision" capable d'estimer un point d'intersection entre une droite matérialisant un déplacement tiré de l'action définie et le maillage surfacique, et d'autre part, le module de forces internes est agencé pour estimer la force interne exercée sur chaque noeud d'une première partie au moins du maillage volumique de l'objet à partir du déplacement tiré de l'action, appliqué aux noeuds appartenant à la maille surfacique contenant le point d'intersection, de conditions aux limites, et de tenseurs de noeud et de tenseurs de liaison issus respectivement pour chaque noeud et chaque liaison d'au moins la première partie au moins, de matrices de rigidité propres à chaque maille volumique d'au moins la première partie et fonction de la loi de déformation.

Bien entendu, la première partie de la maille volumique à laquelle est appliquée la technique ci-dessus, que l'on appellera par la suite "masses/tenseurs", pourra être égale à la maille volumique complète. Dans le cas contraire (lorsqu'il s'agit effectivement d'une partie de cette maille volumique), les forces internes appliquées aux noeuds de la partie complémentaire de cette première partie (appelée par exemple seconde partie) sont déterminées à partir d'une autre technique, comme par exemple celle des éléments finis reposant sur des pré-calculs mémorisés de façon à permettre des calculs en temps réel. Une telle technique est enseignée notamment dans l'article de S. Cotin, H. Delingette, M. Bro-Nielsen et N. Ayache, "Geometric and physical representations for a simulator of hepatic surgery", publié dans les actes de la Conférence Medecine meets with virtual reality de janvier 1996. Dans ce qui suit, on appellera modèle hybride la double technique de calcul des forces internes et de la déformation de l'objet.

Cette technique dite des masses/tenseurs utilisée pour le calcul des forces internes et de la déformation de la maille volumique de l'objet autorise la simulation en continu d'une action exercée sur un outil virtuel au moins. Il est clair que le temps de calcul sera d'autant plus réduit que la dimension de la première partie de la maille volumique sera petite.

Selon une autre caractéristique de l'invention, le dispositif peut comprendre un module de maillage lui permettant de désigner le ou les objet(s) 3D sur lesquels la simulation doit être effectuée par une détermination d'enveloppe externe, puis de décomposer cette ou ces enveloppe(s) en mailles surfaciques, de préférence de forme triangulaire, et enfin de décomposer le volume interne de chaque enveloppe en mailles volumique à partir du maillage surfacique correspondant de façon à fournir le maillage volumique de l'objet associé. Il est clair que dans le cas préféré d'un maillage surfacique triangulaire les mailles volumiques seront de forme tétraédrique. Ces formes sont actuellement préférées car elles permettent une modélisation précise d'un objet de forme complexe. Mais bien entendu, d'autres type de maillage peuvent être utilisés.

De telles enveloppes externes et mailles volumiques peuvent être obtenues par des méthodes respectivement de segmentation (par exemple par extraction d'iso-surfaces) et de type Delaunay-Voronoï. Toutes ces méthodes sont bien connues de l'homme de l'art.

Dans un mode de réalisation du dispositif, son module de forces internes est capable de calculer lui-même les matrices de rigidité de chaque maille volumique, ainsi que les tenseurs de noeud et tenseurs de liaison.

Ces calculs sont, comme cela a été dit précédemment, effectués à partir d'une loi de déformation qui est de préférence, de type élastique linéaire volumique. En d'autres termes, la force exercée sur un noeud dépend des déplacements respectivement de ce noeud et des noeuds auxquels il est connecté, relativement à leurs positions d'équilibre respectives. Bien entendu, on pourrait utiliser d'autres lois de déformation plus complexes et notamment non-linéaires.

Le module de forces internes pourra également être agencé pour déterminer les forces internes exercées sur certains au moins des noeuds de la première partie du maillage volumique à partir de la loi de déformation et de forces auxiliaires surfaciques dépendant de paramètres choisis de l'objet, stockés, comme par exemple la texture de l'objet, la présence de structures et sous-structures sous-jacentes, etc.

On entend ici par forces auxiliaires surfaciques, par exemple des tensions de surface qui permettront, dans certaines situations telles qu'une incision, d'amplifier un effet visuel au niveau de l'affichage.

De même, le module de forces internes pourra être agencé pour estimer les déplacements des noeuds du maillage volumique (au moins sa première partie) à partir du déplacement tiré de l'action définie et de forces externes, en particulier de type force gravitationnelle et/ou forces d'interaction entre objets d'une même région. Cela permet de tenir compte, d'une part, de l'affaissement partiel d'un objet sous son propre poids, et d'autre part, de la présence d'objets voisins et des liens qui existent avec ces objets voisins.

Préférentiellement, les déplacements estimés des noeuds, autres que ceux de ladite maille surfacique comprenant ledit point d'intersection, sont calculés à partir des forces internes par intégrations successives à l'aide d'une méthode choisie parmi au moins la méthode d'Euler et la méthode de Runge-Kutta, et plus préférentiellement encore par la méthode de Runge-Kutta dite "d'ordre 4". Bien entendu, d'autres méthodes d'intégration peuvent être envisagées.

Selon encore une autre caractéristique de l'invention, le module de forces internes peut être capable de simuler des déformations non seulement de type géométrique, mais également de type incision et/ou retrait de matière et/ou déchirement.

Pour permettre la simulation de découpe (ou incision) et/ou de déchirement (ou fracture), le module de forces internes est propre, après détermination des déplacements estimés des noeuds, à supprimer au moins une liaison entre des noeuds voisins en fonction d'un premier critère, puis à mettre à jour les tenseurs de noeud et les tenseurs de liaisons en fonction de la ou des liaisons supprimées, et enfin à recalculer les forces internes des noeuds d'au moins la première partie du maillage volumique.

De préférence, le premier critère porte sur au moins un paramètre choisi parmi au moins une information transmise par l'interface-utilisateur et relative au type d'outil manoeuvré, une variation de volume de la maille volumique comprenant la liaison à supprimer, et une variation de longueur d'une liaison de la maille volumique comprenant la liaison à supprimer.

On entend ici par information, par exemple une donnée précisant que l'outil est manoeuvré en vue d'une incision ou d'une destruction de matière.

De même, pour permettre la simulation de retrait de matière, le module de forces internes est propre, après détermination des déplacements estimés des noeuds, à supprimer un noeud en cas de détection de suppression de toutes les liaisons qui relient ledit noeud aux noeuds voisins ou en fonction du premier critère, puis à mettre à jour les tenseurs de noeud et les tenseurs de liaisons en fonction du noeud et des liaisons supprimés, et enfin à recalculer les forces internes des noeuds d'au moins la première partie du maillage volumique.

Les outils (ici virtuels) capables de découpe (ou d'incision) et/ou de retrait de matière sont par exemple des scalpels, pinces coupantes, ou bien bistouri mécanique ou électrique, ou bien encore lasers.

De plus, le module de forces internes est de préférence agencé pour, en cas de suppression de liaison et/ou de noeud et avant mise à jour des tenseurs de liaison et de noeud, ajouter de nouveaux noeuds indépendants entre eux et de nouvelles liaisons de manière à remailler localement le maillage volumique suite à la suppression.

Lorsque le dispositif est agencé pour travailler selon le modèle hybride précité, son module de forces internes est capable de déterminer les forces internes exercées sur les noeuds d'au moins une seconde partie du maillage volumique à partir de conditions aux limites définies par des noeuds dits "de connexion" placés à l'interface entre les première et seconde parties, et d'une table de tenseurs de déformation, dont chaque tenseur est représentatif de l'influence d'un déplacement élémentaire de chaque noeud d'au moins la seconde partie sur chaque autre noeud d'au moins cette seconde partie.

Les conditions aux limites servant au calcul des forces internes de la seconde partie sont préférentiellement définies par les forces internes calculées pour les noeuds de connexion lors du calcul des forces internes des noeuds de la première partie.

Dans le modèle hybride, le module de forces internes procède de préférence par itérations successives jusqu'à obtention d'une position dite "d'équilibre" des forces internes des noeuds de connexion. Pour ce faire, ce module est agencé pour déduire des valeurs des forces internes exercées sur les noeuds de la seconde partie du maillage volumique, des valeurs de déplacement des noeuds de connexion de manière à fournir des conditions aux limites permettant à leur tour de calculer les forces internes des noeuds de la première partie.

La subdivision du maillage volumique en parties (au moins deux) est déterminée à partir d'un critère prédéterminé portant au moins sur un paramètre des données-image de l'objet choisi parmi des paramètres physiques et des paramètres anatomiques, en particulier sur une intensité. Cette subdivision peut être effectuée pendant la formation du maillage volumique de l'objet 3D. Par conséquent, lorsque le dispositif ne comprend pas de module de maillage, la subdivision peut être effectuée par un traitement externe. Le dispositif peut comprendre un module de partitionnement, par exemple faisant partie du module de maillage si celui existe, destiné à fournir la subdivision du maillage volumique.

Préférentiellement, le module de détermination de "collision" est agencé pour déterminer une collision entre au moins deux outils gérés par l'interface-utilisateur. Ce qui permet de gérer des conflits lorsqu'un ou plusieurs opérateur(s) manoeuvre(nt) au moins deux outils en même temps.

Dans ce but, chaque outil est représenté par au moins un point matérialisant son extrémité d'interaction avec l'objet, et une multiplicité de points reliés entre eux, ainsi qu'à l'extrémité, par des segments, matérialisant sa "tige".

De préférence, le module de détermination de collision estime les coordonnées du point d'intersection entre "l'outil" et une maille surfacique comme suit.

Tout d'abord, il crée un espace tridimensionnel englobant l'enveloppe externe de l'objet, puis il décompose cet espace en cellules volumiques dont le nombre est choisi de sorte que chaque cellule comporte un nombre de noeud du maillage volumique de l'objet sensiblement égal au nombre de noeuds contenus dans les autres cellules volumiques, chaque cellule intersectant la surface externe comportant au moins un noeud, et enfin il stocke dans des multiplets les coordonnées de chaque noeud en référence à la cellule volumique qui l'englobe. La présence d'un point de l'outil dans l'espace s'effectue alors, de préférence, par une comparaison entre les multiplets et les coordonnées du point. L'un de ces multiplets permet de désigner la cellule volumique de l'espace dans laquelle se trouve le point.

Puis, de préférence, le module de détection de collision détermine la distance (euclidienne) qui sépare le point de l'outil du ou des noeuds englobés dans la cellule volumique désignée de façon à déterminer la plus petite de ces distances, appelée distance minimale. Il détermine ensuite la distance (par exemple euclidienne) qui sépare le point du ou des noeuds englobés dans un nombre prédéterminé de cellules volumiques voisines de la cellule volumique dans laquelle il se trouve de façon à comparer ses distances à la distance minimale. Puis, il détermine l'ensemble des mailles surfaciques adjacentes au noeud associé à la distance minimale de façon à déterminer si un segment défini par la position du point de l'outil et par sa position précédente intersecte l'une au moins de ces mailles surfaciques adjacentes. Il en déduit finalement les coordonnées (barycentriques) du point d'intersection (ou de collision) entre l'objet et l'outil, en vue de leur transmission au module de forces internes.

De façon préférentielle, le module de détection de collision est capable de modifier le contenu des multiplets entre deux déterminations de présence de points de l'outil à l'intérieur des cellules volumiques, en cas de détection d'une déformation du maillage par le module de forces internes. Cela permet d'améliorer la précision de la détection de collision et donc du calcul de la déformation.

Afin de permettre une simulation d'action sur un ou plusieurs outils la plus proche de la réalité, l'interface-utilisateur comprend un ensemble-harnachement manoeuvrable par au moins une main d'opérateur pour simuler la manoeuvre de chaque outil. L'opérateur manoeuvre ainsi l'ensemble-harnachement, qui peut être un "joystick" muni éventuellement d'actionneur(s) ou bien un "gant" articulé fixé sur sa main, puis l'interface-utilisateur définit le déplacement de l'outil virtuel associé à partir de cette manoeuvre.

Selon encore une autre caractéristique de l'invention, le dispositif comprend des moyens d'affichage permettant de visualiser en temps réel (et en continu) l'image (formée des données-image) de l'objet et d'une représentation de l'outil.

L'invention s'applique tout particulièrement aux jeux de données-image représentant une image numérique tridimensionnelle d'une région comportant au moins un objet 3D, dont l'objet désigné, et plus particulièrement encore aux jeux de données-image représentant une image numérique tridimensionnelle d'une région d'un être vivant (animal ou humain) comprenant des structures anatomiques déformables telles que le foie, le rein, la vésicule biliaire, ou bien encore le coeur.

L'invention propose également un procédé de traitement de données-image numériques pour la mise en oeuvre du dispositif décrit ci-avant, comprenant les étapes connues suivantes :

- prévoir une interface-utilisateur capable de générer un retour de force, conformément aux réactions d'un outil,
- établir, à partir d'une loi de déformation et d'une action définie par l'interface-utilisateur et représentative d'une manoeuvre de l'outil, un champ de forces internes entre des noeuds d'un maillage volumique fonction d'un maillage surfacique d'un objet 3D apparaissant dans un jeu de données-image,
- déterminer la force de réaction de l'objet qui correspond à sa déformation estimée à partir des forces internes, de sorte que la force générée par l'interface-utilisateur soit sensiblement équilibrée par cette force de réaction,
- calculer de nouvelles données-image de l'objet, en présence des déformations estimées, complétées de la représentation dudit outil,

et caractérisé par le fait que l'on prévoit une étape dans laquelle on estime un point d'intersection entre une droite matérialisant un déplacement tiré de l'action définie et le maillage surfacique, et que l'on estime la force interne exercée sur les noeuds d'une première partie au moins du maillage volumique de l'objet, à partir du déplacement appliqué aux noeuds appartenant à la maille surfacique contenant le point d'intersection, de conditions aux limites, et de tenseurs de noeud et de tenseurs de liaison issus respectivement pour chaque noeud et chaque liaison de cette partie au moins, de matrices de rigidité propres à chaque maille volumique d'au moins la première partie et fonction de la loi de déformation.

D'autres caractéristiques et avantages de l'invention apparaîtront à l'examen de la description détaillée qui va suivre, ainsi que des dessins annexés, sur lesquels :

- la figure 1 est une photographie d'une partie d'un dispositif de simulation selon l'invention;

- la figure 2 est un schéma fonctionnel illustrant l'architecture d'un dispositif de simulation selon l'invention dans un mode de réalisation à deux modules de traitement;

- la figure 3 illustre schématiquement le mode de déplacement d'un outil piloté par un type d'interface-utilisateur du dispositif selon l'invention;

- la figure 4 illustre l'enveloppe externe (ou surface externe) d'un foie humain obtenue à partir d'une technique de segmentation;

- la figure 5 illustre l'enveloppe externe du foie de la figure 4 muni d'un maillage surfacique de type triangulaire;

- la figure 6 est un schéma illustrant un maillage volumique tétraédrique obtenu à partir d'un maillage surfacique triangulaire du type de celui de la figure 5;

- la figure 7 est un schéma illustrant les déplacements à un instant t de deux noeuds par rapport à leurs positions d'équilibre respectives et des positions d'équilibre de leurs noeuds voisins;

- la figure 8 est un schéma illustrant une maille volumique tétraédrique et la désignation des tenseurs de noeud et des tenseurs de liaison respectivement associés à ses noeuds et liaisons;

- la figure 9 est un exemple de matrice de rigidité d'un objet 3D représenté par 15 noeuds, les croix (X) signalant des valeurs non nulles et les points (.) des valeurs nulles;

- la figure 10 est un mécanisme illustrant les étapes de détermination d'un maillage final d'un objet 3D à l'équilibre;

- la figure 11 est un mécanisme illustrant les étapes de détermination d'une déformation et de l'image de l'objet déformé;

- la figure 12 est un schéma illustrant la modification de la topologie d'un maillage volumique tétraédrique suite à la rupture d'une liaison;

- les figures 13A à 13D illustrent une simulation sur quatre images successives de l'action de l'extrémité d'un outil virtuel sur un lobe de foie;

- la figure 14 est un schéma illustrant une décomposition d'un maillage surfacique triangulaire en deux domaines (ou parties), dans un traitement de type hybride;

- la figure 15 est un mécanisme illustrant une boucle de détermination de positions d'équilibre dans un maillage hybride;

- la figure 16 est un schéma illustrant un espace englobant le foie de la figure 4 et décomposé en cellules volumiques parallélépipédiques;

- la figure 17 est un schéma illustrant une partie d'un maillage volumique tétraédrique contenu dans une cellule volumique parallélépipédique, ainsi qu'un point de collision entre un outil et l'une des mailles surfaciques triangulaires de la partie dudit maillage volumique; et

- la figure 18 est un schéma illustrant la matérialisation d'un outil sous forme de points et segments, en référence à une partie d'un maillage surfacique triangulaire.

Les dessins sont, pour l'essentiel, de caractère certain. En conséquence, ils font partie intégrante de la présente description. Ils pourront donc non seulement servir à mieux faire comprendre l'invention, mais aussi contribuer à la définition de celle-ci.

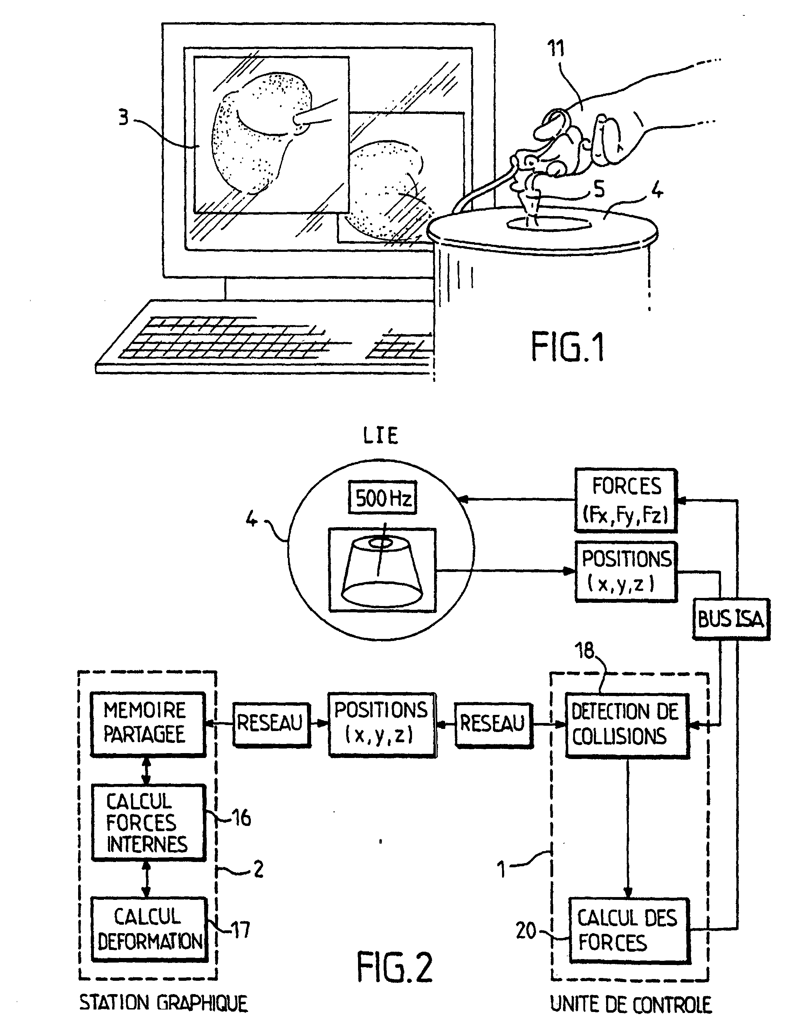

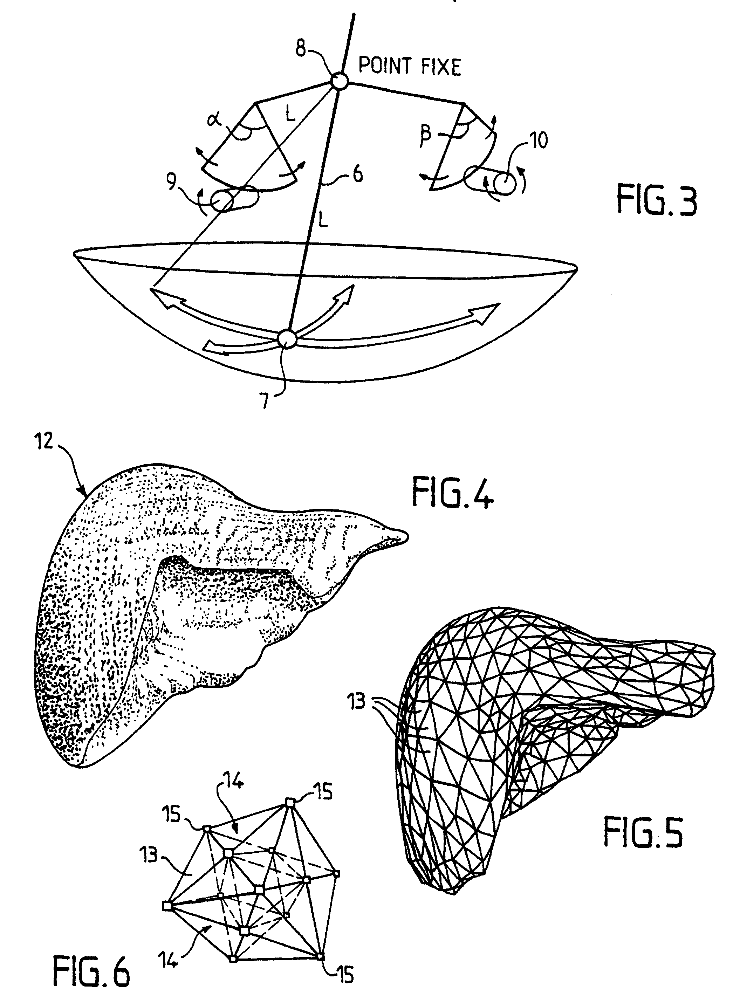

Dans ce qui suit, on fera référence à un traitement d'un jeu de données-image numériques formant une image tridimensionnelle (3D) médicale, et plus particulièrement, mais seulement à titre d'exemple, à des images de régions du foie du type de celle illustrée partiellement sur les figures 1 et 4, lesquelles ont été obtenues sur un sujet humain.

Il est cependant clair que l'invention n'est pas limitée au traitement d'images médicales, et encore moins à celui d'images du foie. Elle s'applique de façon générale au traitement d'images numériques d'objets tridimensionnels (3D), notamment déformables, en vue d'une simulation de leur déformation par au moins un outil virtuel. Le mot déformation est ici entendu dans son acceptation la plus générale, à savoir aussi bien de type géométrique (surfacique ou volumique) que de type incision, ou déchirement, ou bien encore retrait de matière.

En matière médicale, un jeu de données-image formant une image tridimensionnelle (3D) est obtenu à l'aide d'appareils tels que les scanners à rayons X ou les appareils de résonance magnétique nucléaire (IRM), ou plus généralement tout type d'appareil capable d'acquérir des images à variation d'intensité. Chaque partie élémentaire d'une région représentée par une image 3D est définie par 3 coordonnées spatiales et au moins une grandeur physique mesurée, comme par exemple une intensité.

Dans le cas d'une IRM, l'image 3D d'une région observée est constituée d'une multiplicité de coupes 2D empilées, dans lesquelles les variations d'intensité représentent la densité en proton des tissus.

Sur la figure 1 se trouve partiellement illustré un dispositif selon l'invention destiné à simuler le comportement dynamique d'un objet tridimensionnel (3D). Ici, comme indiqué précédemment, l'objet 3D est un foie humain.

Le dispositif comprend dans l'exemple illustré, une unité de contrôle et de calcul 1 couplée à une station graphique 2 comprenant des moyens d'affichage, comme par exemple un moniteur 3, ainsi qu'à une interface-utilisateur 4 à retour de force.

Dans cet exemple, l'unité de contrôle 1 et la station graphique 2 sont deux calculateurs séparés, mais il est clair qu'ils pourraient former une unique unité de calcul.

Dans le mode de réalisation illustré, l'unité de contrôle 1 est de préférence un micro-ordinateur de type PC, tandis que la station graphique 2 est de préférence une station de travail de type DEC ALPHA 233 MHz équipée d'une carte graphique 3D accélératrice. Il est ici préférable d'utiliser l'unité de calcul la plus puissante pour gérer l'affichage des images, du fait de la nécessité de calculer la déformation et d'afficher en temps réel à la fois l'image du foie et de la représentation d'un outil, ou plusieurs, ce qui nécessite un rafraîchissement des images à une fréquence de type vidéo supérieure à 20 Hz.

Par ailleurs, la liaison entre l'unité de contrôle 1 et l'interface-utilisateur à retour de force 4 sera de préférence un bus ISA, lequel autorise des vitesses de transfert de données de 10 kHz bien supérieures à la fréquence requise pour le retour de force, laquelle est généralement comprise entre 300 et 500 Hz.

L'interface-utilisateur à retour d'effort 4 comprend une commande manuelle 5 (ou ensemble-harnachement) de type "joystick" capable de reproduire le comportement d'un outil de chirurgie minimalement invasif. Il pourra s'agir notamment d'un outil de chirurgie laparoscopique ou coelioscopique. Dans ce qui suit, on considérera que le joystick simule le mouvement d'une pince coupante microscopique destinée à être introduite dans le corps d'un patient via un point fixe appelé trocart en vue d'une intervention sur le foie. Bien entendu, l'invention n'est pas limitée à ce seul type de chirurgie, ni d'outil.

L'interface-utilisateur à retour d'effort 4 pourra par exemple être le "laparoscopic impulse engine" (LIE) de la Société Immersion Corporation, ou bien le dispositif PHANToM développé par le Massachussets Institute of Technology. Le "laparoscopic impulse engine" (LIE) possède cinq degrés de liberté, trois pour représenter les déplacements dans l'espace de la tige de l'outil, un quatrième pour la rotation de cette tige autour d'un axe passant par le trocart, et un cinquième associé à l'ouverture ou la fermeture de la pince placée à l'extrémité de la tige. Le retour d'effort peut être appliqué à trois de ces degrés de liberté à l'aide de moteurs. La transmission des forces est réalisée via un système de câbles et de cabestans délivrant ainsi un couple élevé et progressif.

Sur la figure 3 se trouve illustré schématiquement le mode de déplacement de la tige 6 de la pince coupante pilotée par le LIE. L'extrémité 7 de la tige 6 est ici matérialisée par une sphère qui représente schématiquement l'extrémité active (par exemple coupante) de l'outil virtuel. Le trocart est matérialisé par un point fixe 8 par lequel passe la tige 6 de l'outil, laquelle est connectée à deux moteurs 9 et 10 qui lui permettent des déplacements sur une calotte sphérique dont le rayon varie selon la longueur de la tige 6, laquelle est gérée par un troisième moteur non représenté. La position de l'extrémité 7 de l'outil sur la calotte sphérique est déterminée par les valeurs des angles $\alpha$ et $\beta$.

Lorsqu'un opérateur manoeuvre, à l'aide de sa main 11 (voir figure 1), la partie préhensible du joystick 5, il peut déplacer l'axe 6 de manière à faire varier la longueur qui sépare le point fixe 8 (ou trocart) de l'extrémité coupante 7 permettant ainsi de simuler le rapprochement de l'outil vers l'objet 3D, mais il peut également déplacer cette extrémité 7 sur une calotte sphérique dont le rayon dépend de la distance trocart-extrémité.

Bien entendu, l'interface-utilisateur 4 peut comprendre deux LIE de façon à permettre la simulation du maniement simultané de deux outils.

Un but du dispositif selon l'invention est, comme cela a déjà été dit, de traiter en temps réel des données-image numériques formant des images successives tridimensionnelles d'un objet 3D (ici un foie humain), obtenues, par exemple, par scannograpie par rayons X, ou par IRM, selon l'objet ou organe concerné.

Il faut tout d'abord que le dispositif possède le jeu de données-image formant l'image de l'objet 3D, l'enveloppe externe de cet objet, le maillage surfacique de cette enveloppe, et le maillage volumique primaire de l'objet formé à partir du maillage surfacique. Toutes ces données peuvent être obtenues en dehors du dispositif selon l'invention. Elles pourront notamment provenir d'une banque de données d'images couplée à un module de maillage. Cependant, le dispositif peut comprendre un module de maillage capable de déterminer l'enveloppe externe et les maillages surfacique et volumique primaire sur la base d'un jeu de données-image fourni par un moyen externe.

L'enveloppe externe 12 (voir figure 4) pourra être obtenue par toute technique connue de l'homme de l'art, et par exemple à l'aide d'une technique de segmentation de type extraction d'iso-surface telle que les techniques dites des "3D snakes" ou bien des "marching cubes", bien connues de l'homme de l'art.

Dans le cas d'un module de maillage intégré au dispositif, celui-ci sera de préférence logé dans la station graphique 2.

La forme générale des mailles surfaciques 13 décomposant l'enveloppe externe est de préférence triangulaire (voir figure 5). Un critère d'optimisation de la surface des mailles surfaciques pourra être mis en oeuvre afin d'obtenir un maillage régulier. Bien entendu, d'autres types de maillages surfaciques peuvent être utilisés, comme notamment les maillages "simplexes" développés par H. Delingette et divulgués dans le rapport technique de l'INRIA N° 2214 sous le titre "Simplex meshes : a general representation for 3D shape reconstruction", 1994.

A partir des mailles surfaciques 13, on détermine un maillage volumique de l'objet 3D, ici le foie. Il est clair que la forme générale des mailles dépend de la forme des mailles surfaciques 13. Dans cet exemple où les mailles surfaciques 13 sont triangulaires, les mailles volumiques (voir figure 6) sont avantageusement des tétraèdres 14 aux quatre sommets desquels se trouvent placés des noeuds 15 sur lesquels est répartie la masse de l'objet, laquelle est connue par ailleurs.

Cette décomposition du volume englobé par l'enveloppe externe 12 en mailles, ici des tétraèdres, peut être obtenue à l'aide d'un algorithme de type Delaunay-Voronoï utilisant, par exemple, le module Simail commercialisé par la Société française SIMULOG S.A. Bien entendu, d'autres algorithmes pourront être utilisés en vue de l'obtention du maillage volumique.

Comme cela a déjà été indiqué précédemment, le dispositif selon l'invention ne comprend pas nécessairement un module de maillage destiné à déterminer l'enveloppe externe de l'objet 3D et/ou la décomposition en mailles surfaciques et/ou la décomposition en mailles volumiques. Tout ou partie de ce traitement du jeu de données-image de l'objet 3D peut être effectué de façon totalement séparée du dispositif selon l'invention.

Connaissant le jeu de données-image de l'objet 3D, et sa décomposition en mailles volumiques 14, ici tétraédriques, le dispositif va déterminer les forces dites "internes" qui sont exercées sur chaque noeud 15 du maillage volumique. Il est clair que la somme des forces internes qui s'exercent sur un noeud donné n'est différente de zéro que lorsque ce noeud est mis hors de sa position d'équilibre. Pour ce faire, il faut qu'une force externe soit appliquée sur l'un au moins des noeuds, par exemple par un outil.

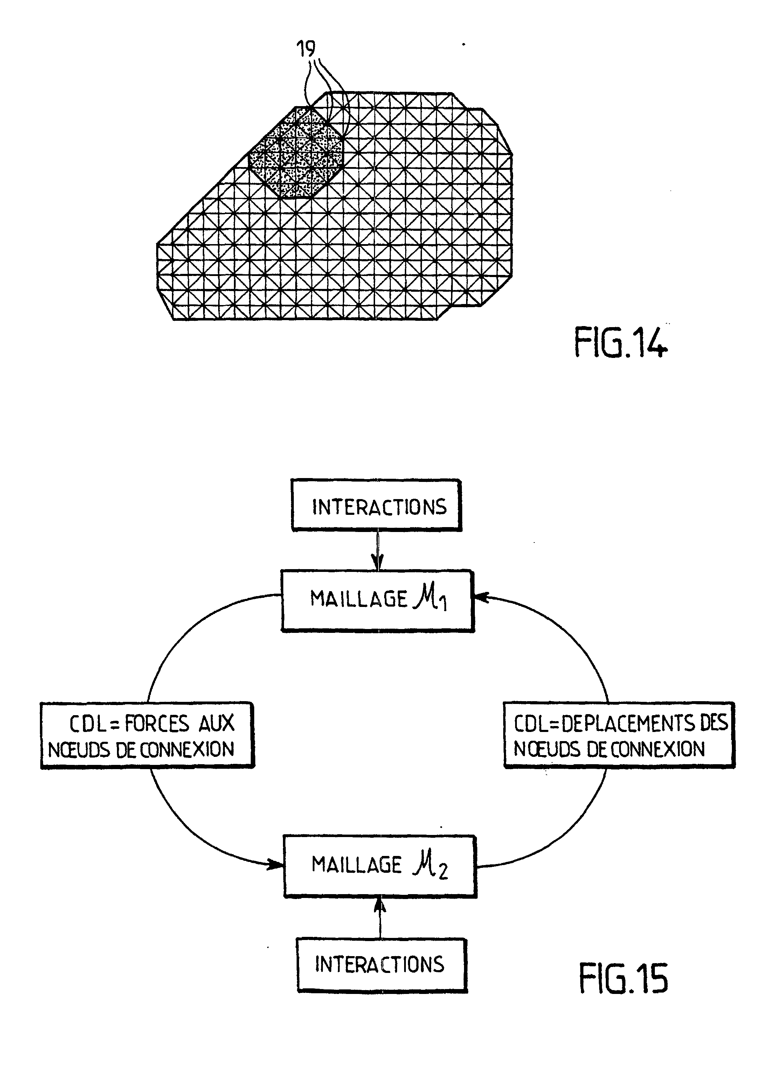

Les forces internes peuvent être déterminées, soit sur la totalité du maillage volumique à l'aide d'une première méthode utilisant une unique technique dite "masses/tenseurs" qui sera décrite ci-après, soit à l'aide d'au moins d'une seconde méthode utilisant la première technique masses/tenseurs ainsi qu'une seconde technique, différente, chaque technique étant appliquée à au moins un domaine issu d'une décomposition du maillage volumique. Cet seconde méthode, dite "hybride", sera décrite plus loin, en référence aux figures 14 et 15.

Néanmoins, quelle que soit la méthode, la détermination des forces internes s'effectue grâce à un module de forces internes 16 (voir figure 2) qui est de préférence intégré dans la station graphique 2 (mais elle pourrait être intégrée dans l'unité de contrôle 1), et qui requiert l'assistance d'un module de détection de collision 18 intégré, de préférence, dans l'unité de contrôle 1.

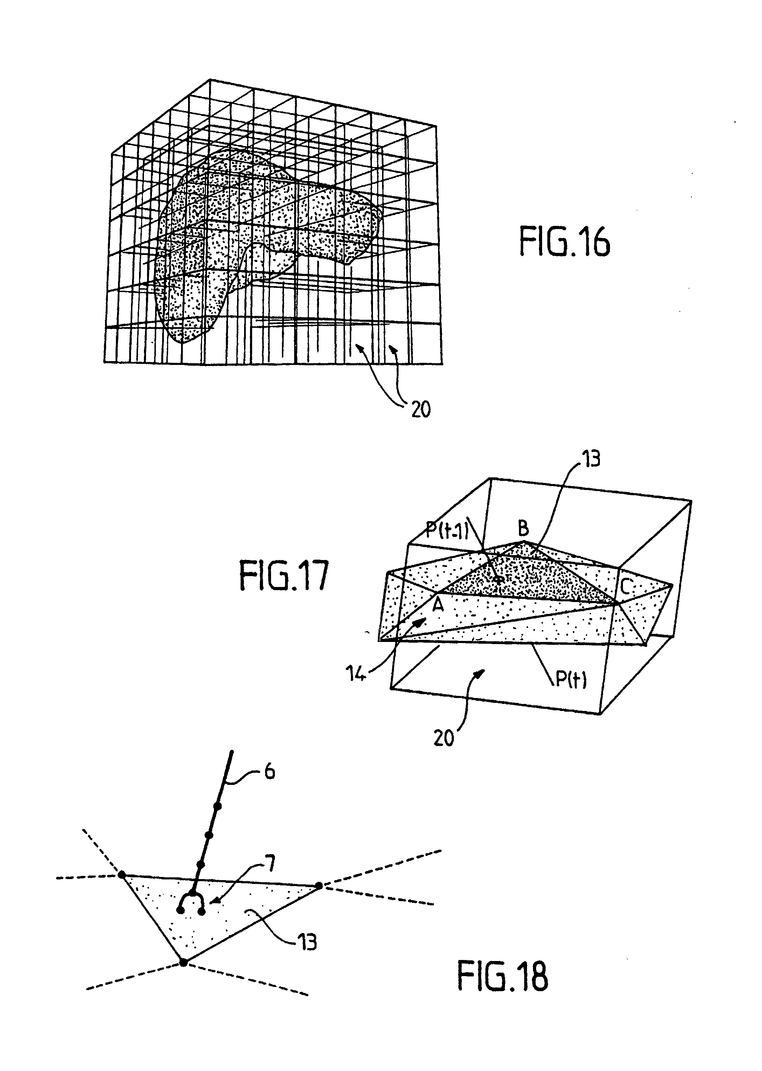

Un tel module a pour objet de déterminer de façon précise le lieu de collision (ou d'intersection) entre un point matérialisant une partie de l'outil et l'enveloppe externe de l'objet 3D, ou plus précisément une maille surfacique de cette enveloppe (voir figures 16 à 18). Cela permet de fournir au module de forces internes 16 la désignation d'au moins un noeud de la maille surfacique sur lequel l'outil agit, et qui va permettre de déterminer les forces internes exercées en chaque autre noeud de la maille volumique.

Le niveau de précision du point d'intersection (ou de collision) peut être géré à partir du nombre de points utilisés pour matérialiser, d'une part, l'extrémité 7 de l'outil, et d'autre part, la tige 6 de celui-ci. En d'autres termes, la détection de collision effectuée par le module de détection de collision 18 peut être appliquée en un ou plusieurs points matérialisant l'outil. Un exemple de discrétisation de la forme de l'outil (tige et extrémité) est donné sur la figure 18, sur laquelle chaque point autre que les points matérialisant les noeuds d'une maille surfacique 13 sont reliés les uns aux autres par des segments de façon à reconstituer la forme de l'outil et plus particulièrement celle de sa tige et de son extrémité, ici des pinces coupantes. Il est possible d'appliquer la détection de collision à la tige 6 de l'outil de façon à déterminer une collision entre deux tiges d'outils actionnés simultanément.

Le module de détection de collision 18 fonctionne comme décrit ci-après. Dans un premier temps, l'outil est discrétisé en un certain nombre de points $p_k$, qui dépend à la fois de l'instrument utilisé et de la précision souhaitée. Puis, on définit un espace qui englobe l'objet 3D concerné. Cet espace est alors subdivisé en cellules volumiques, par exemple de formes parallélépipédiques. Le nombre de cellules volumiques dans chaque direction de l'espace peut être paramétrable, et est de préférence choisi en fonction de la géométrie de l'objet 3D. De préférence, le paramétrage est choisi de sorte que le nombre de noeuds du maillage volumique de l'objet 3D soit sensiblement identique dans toutes les cellules volumiques de l'espace défini par le module de détection de collision et contenant l'objet. On impose, également de préférence, une contrainte qui consiste à obliger que chaque cellule volumique intersectant la surface externe de l'objet englobe au moins un noeud du maillage.

A partir de cette décomposition de l'espace qui englobe l'objet 3D en cellules volumiques, on génère une table dans laquelle se trouvent mémorisés des multiplets comportant les coordonnées de chaque noeud du maillage volumique en référence à la définition de la cellule volumique qui l'englobe. La détermination d'un point de collision au niveau d'une maille surfacique 13 de l'enveloppe externe de l'objet 3D s'effectue à l'aide d'une comparaison entre la position d'un point mobile $p_k$ de l'outil qui est déduite des informations fournies par l'interface-utilisateur à retour de force 4, ainsi qu'à partir des multiplets mémorisés dans la table.

Pour ce faire, on définit une fonction de code qui permet de calculer une entrée à l'intérieur de la table et de trouver la liste des noeuds du maillage volumique qui correspondent à cette entrée, lesdits noeuds appartenant alors à la même cellule volumique que le point mobile $p_k$. Une telle fonction de code est donnée par les formules référencées (1) en annexe, à titre d'exemple.

On détermine alors pour chaque noeud $N_i$ situé dans la même cellule volumique que le point mobile $p_k$, la distance euclidienne entre $p_k$ et chacun des $N_i$. On note alors $d_{min}$ la plus petite des distances ainsi calculées. On calcule ensuite la distance d qui sépare le point mobile $p_k$ de chaque noeud $N_j$ situé dans un nombre prédéterminé de cellules volumiques voisines, par exemple 26. Si l'une de ces distances d associé à un noeud N est inférieure à $d_{min}$, alors $d_{min}$ = d. Il est clair que le temps de calcul sera d'autant plus important que le nombre de noeuds à l'intérieur d'une cellule volumique sera grand.

Ensuite, on détermine le nombre de mailles surfaciques 13 (ici des triangles) qui sont adjacentes au noeud N associé à la distance minimale $d_{min}$ = d. Puis, pour chaque maille surfacique adjacente à N, on cherche si elle est intersectée par le segment $[P_t, P_{t-1}]$ défini par les positions du point mobile $p_k$ aux instants t et t-1, comme illustré sur la figure 17. Ainsi, quelle que soit la vitesse de déplacement de l'outil, on pourra toujours déterminer le point d'intersection (ou de collision), étant donné que seule la longueur du segment $[P_t, P_{t-1}]$ varie en fonction de la vitesse.

La position du point de collision est sub-triangulaire. Par conséquent, les coordonnées de ce point de collision sont déterminées par une méthode barycentrique. Ces coordonnées barycentriques sont ensuite transmises au module de forces internes 16 de sorte que la force exercée par l'outil sur le maillage volumique soit estimée précisément.

Connaissant la maille surfacique intersectée, le module de forces internes 16 en déduit les noeuds sur lesquels l'action de l'outil s'exerce. Puis, à partir des coordonnées barycentriques, il en déduit la répartition du déplacement de l'outil virtuel sur chacun des noeuds de la maille surfacique désignée. Dans le même temps, l'interface-utilisateur 4 fournit au module de forces internes 16 les informations relatives au déplacement vectoriel de l'outil, soit directement via un bus, soit via l'unité de contrôle 1.

Le dispositif selon l'invention utilise une technique que l'on appelle "masses/tenseurs" dans laquelle on soumet les noeuds appartenant à la maille surfacique, lieu de la collision avec l'outil, au déplacement vectoriel fourni (réparti selon les coordonnées barycentriques desdits noeuds), puis on estime les forces internes appliquées en chaque noeud du maillage volumique. Cette estimation est de préférence itérative, chaque itération permettant de calculer les forces internes appliquées en un premier "niveau" de noeuds, puis celles d'un "niveau" suivant constitué des noeuds voisins des noeuds de ce premier "niveau", et ainsi de suite jusqu'à ce que tous les noeuds soient traités. Cela constitue une espèce de mécanisme de "propagation de contrainte" de noeuds à noeuds. En fait, lors de la première itération seules les forces internes d'un premier niveau de noeud sont non nulles, celles des autres noeuds étant nulles. C'est au cours des itérations suivantes que progressivement ("niveau" après "niveau") l'on obtient les forces internes (non nulles) des autres noeuds du maillage.

Cette technique permet d'estimer les forces internes de façon indépendante de la direction des liaisons. Ainsi, la déformation induite par l'outil virtuel sur l'objet 3D est indépendante de son maillage volumique. Une telle caractéristique d'indépendance relativement au maillage initial, est particulièrement intéressante dans le domaine de la simulation, notamment d'intervention chirurgicale, où les déformations induites par un outil sont généralement volumique comme dans le cas d'une incision, ou d'un déchirement, ou encore d'un retrait de matière.

Dans une approche où la loi de déformation est de type élastique linéaire volumique, la force interne exercée sur un noeud Ni soumis à un déplacement u est donnée par la formule référencée (2) en annexe.

Cette formule (2) peut se décomposer en deux parties, ou deux forces, l'une associée au déplacement propre du noeud (ou masse) $N_i$ par rapport à sa position d'équilibre, l'autre associée au déplacement d'un noeud voisin $N_j$. Soit $v$ l'ensemble des noeuds $N_j$ voisins du noeud $N_i$, la formule 2 des forces internes appliquées au noeud $N_i$ peut alors se réécrire comme indiqué dans la formule (3) donnée en annexe.

Dans cette formule (3), les expressions entre crochets, $[T_{ii}]$ et $[T_{ij}]$, représentent des matrices de dimension 3x3 que l'on appellera par la suite respectivement tenseurs de noeud et tenseurs de liaison, du fait de leur définition similaire à celle des tenseurs de force bien connus de l'homme de l'art.

Pour déterminer ces tenseurs de noeud et de liaison, il est nécessaire, tout d'abord, d'évaluer la matrice de rigidité élémentaire $[K^e]$ associée à chaque maille volumique (ici un tétraèdre) adjacente à chaque liaison issue du noeud $N_i$.

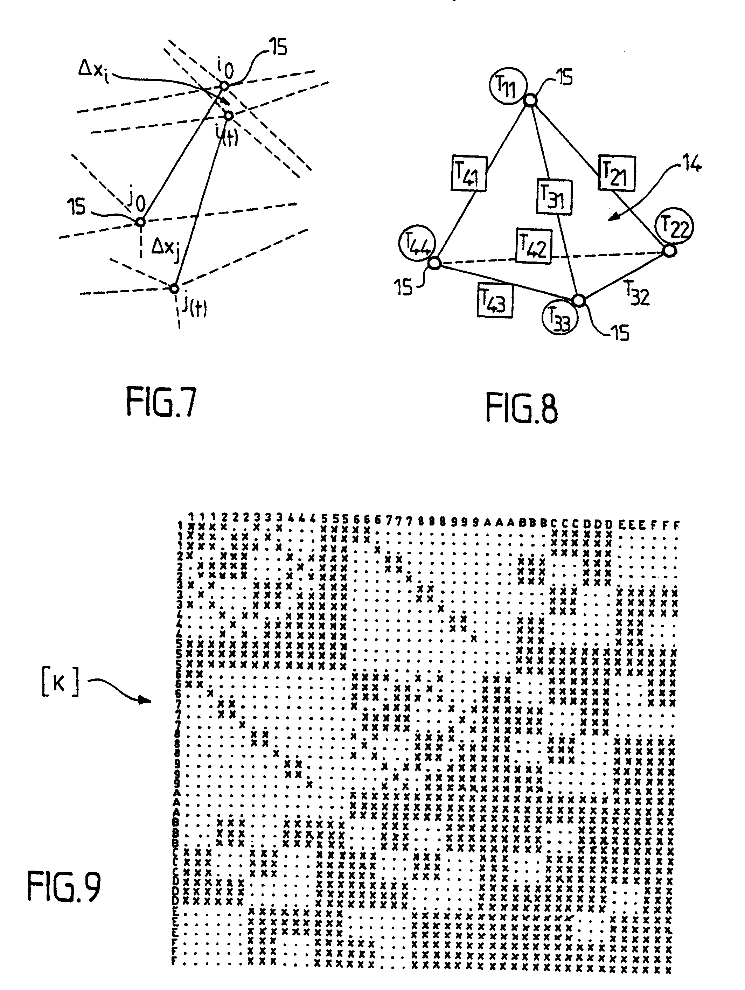

Comme cela est représenté sur la figure 7, le déplacement vectoriel d'un noeud $N_i$ entre un instant indicé 0 et l'instant t peut être noté $\Delta x_i$. Ce déplacement comprend trois composantes selon les trois directions de l'espace.

Une matrice de rigidité représente pour un objet 3D, notamment déformable, les différentes relations qui existent entre ses éléments constituants. En d'autres termes, elle traduit l'influence d'un noeud sur d'autres noeuds, laquelle est donnée par la loi de déformation. Les valeurs numériques des composantes d'une matrice de rigidité dépendent par conséquent des paramètres d'élasticité de l'objet qui sont connus. La loi de déformation peut être mémorisée dans le module de forces internes 16 de la station graphique 2.

Si l'on désigne par T une maille volumique tétraédrique, alors la matrice de rigidité élémentaire de ce tétraèdre est donnée par la formule (4) donnée en annexe, à titre d'exemple.

Une fois la matrice de rigidité $[K^e]$ de chaque tétraèdre T calculée, on associe à chaque sommet de tétraèdre (ou chaque noeud), ainsi qu'à chacune de ses liaisons, respectivement un tenseur de noeud $T_{ii}$ ou un tenseur de liaison $T_{ij}$, comme cela est illustré sur la figure 8. Cette association s'effectue à partir des formules implicites données en annexe sous la référence (5).

A partir de l'ensemble des matrices de rigidité élémentaires $[K^e]$, on peut déterminer la matrice de rigidité global [K] de l'objet 3D. Une telle matrice est illustrée, à titre d'exemple, sur la figure 9, dans le cas d'un objet 3D représenté par 15 noeuds référencés de 1 à F. Ici, les croix représentent des valeurs non nulles, tandis que les points représentent des valeurs nulles.

Afin de simplifier les calculs des forces internes, il est possible de limiter le nombre de liaisons dans la maille volumique en filtrant les valeurs des composantes des matrices de rigidité élémentaires $[K^e]$, par exemple en les comparant à un seuil. Ainsi, toute valeur inférieure à ce seuil est considérée comme nulle, ce qui revient à supprimer des liaisons entre deux noeuds. Cette technique de simplification des matrices permet de ne déterminer que les liaisons qui sont indispensables à la transmission des contraintes (de déplacement) dans le maillage volumique.

Par ailleurs, il est également possible de simplifier le calcul des tenseurs de liaison en tenant compte de la propriété de symétrie de la matrice de rigidité globale [K]. En effet, un seul et unique tenseur de liaison suffit pour caractériser chaque liaison. En d'autres termes, soit $l_{ij}$ la liaison définie entre les noeuds $N_i$ et $N_j$, le tenseur de liaison associé à cette liaison sera $[T_{ij}]$ si i>j et $[T_{ij}]^t$ si i<j. L'exposant t désigne la transposée de la matrice concernée.

Arrivé à ce stade, on dispose, d'une première part, des coordonnées de chaque noeud $N_i$, d'une seconde

part, de l'enveloppe externe, du maillage surfacique de cette enveloppe externe et du maillage volumique final de l'intégralité de l'objet 3D, d'une troisième part des liaisons $l_{ij}$ entre deux noeuds Ni et Nj de l'ensemble des tétraèdres T composant le maillage volumique de l'objet 3D, et d'une quatrième part, de l'ensemble des tenseurs de noeud $[T_{ii}]$ et tenseurs de liaison $[T_{ij}]$ associés à chaque noeud et chaque liaison de chaque tétraèdre T.

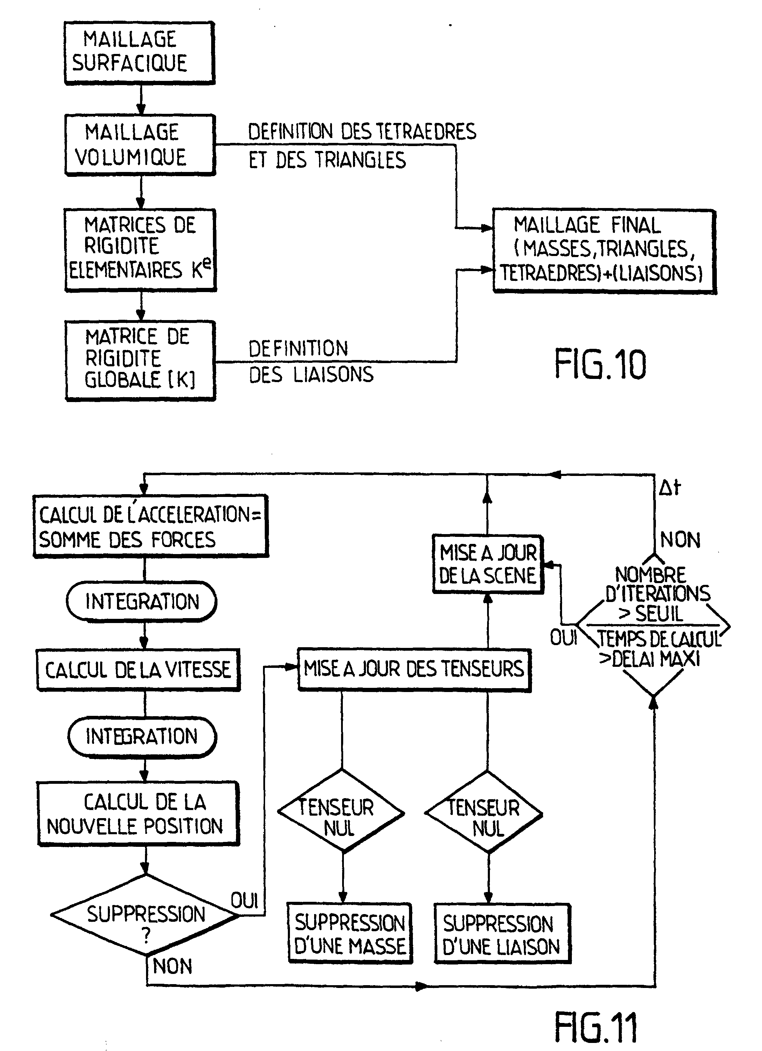

On définira alors, de préférence, une structure (ou base) de données permettant de connaître, d'une première part, l'indice des deux noeuds situés aux extrémités de chaque liaison, d'une seconde part, la référence d'un tétraèdre (maille volumique) adjacent à un triangle (maille surfacique), d'une troisième part, l'état d'un tétraèdre (actif ou inactif), et d'une quatrième part, l'état d'une liaison (active ou inactive). Ces informations pourront être utiles pour la prise en compte de déformations de type incision, déchirement ou retrait de matière, aussi bien au niveau graphique que physique. Les différentes étapes d'obtention de tous ces paramètres sont résumées sur la figure 10.

Afin de tenir compte de forces de surface auxiliaires, permettant par exemple d'amplifier un effet ressenti lors d'une incision ou découpe, le module de forces internes 16 du dispositif selon l'invention peut combiner les forces de liaison surfaciques et volumiques décrites précédemment à des forces de tension $F_i^{tension}$ du type de celles données dans la formule (6) en annexe. Ces forces peuvent être choisies en faisant varier $l_0$ la longueur à vide du ressort associé, ainsi que sa raideur, selon l'importance de l'amplification souhaitée. Cette importance peut être définie, par exemple, par l'opérateur, ou bien par l'interface-utilisateur 4 selon le type d'outil et/ou le type d'objet sur lequel l'intervention a lieu.

Lorsqu'une telle prise en compte est effectuée, la formule (3) de la force interne exercée sur un noeud $N_i$ se transforme en la formule (7) donnée en annexe.

Par ailleurs, il est également possible de tenir compte dans le calcul des forces internes exercées sur chaque noeud du maillage volumique, d'un ou plusieurs types de forces extérieures dues à la présence d'autres objets au voisinage de l'objet 3D concerné, ainsi qu'aux forces gravitationnelles qui font qu'un objet 3D aura tendance à s'affaisser sous son propre poids du fait de la gravité. De telles forces extérieures peuvent être par exemple le poids exercé en une partie de l'objet 3D par un objet voisin, ou bien la force d'attachement exercée par un lien, comme par exemple un ligament, entre l'objet 3D et un objet voisin.

Il est clair qu'une force de type attachement, peut être considérée comme une condition aux limites assimilable, par exemple, à une force de rappel d'un ressort amorti possédant une extrémité fixe, l'autre extrémité étant reliée à un noeud d'une maille surfacique de l'objet 3D.

La détermination de la déformation d'un objet 3D, ou plus précisément de son maillage volumique, requiert la connaissance à chaque instant des déplacements de chaque noeud de ce maillage volumique. Cette détermination en temps réel repose sur un principe d'animation dynamique qui relie la somme des forces appliquées sur l'objet 3D déformable à son accélération. Ici, l'objet 3D déformable est formé par un ensemble de masses ponctuelles (ou noeuds $N_i$) reliées entre elles par des forces de liaison. Il est par conséquent possible d'appliquer l'équation générale de la mécanique à un maillage volumique de façon à simuler le comportement dynamique de l'objet 3D qu'il représente lorsque celui-ci est déformé par des forces extérieures générées par un outil dont le déplacement est défini par l'interface-utilisateur à retour de force 4, en réaction à une manoeuvre du joystick 5 par un opérateur.

A un instant t donné, la force appliquée sur un noeud $N_i$ de masse $m_i$ est donc donnée par l'équation générale de la dynamique donnée dans la formule (8) en annexe.

Dans la suite, on supposera que tous les noeuds du maillage volumique possèdent la même masse ($m_i = \mu$). Bien entendu, on pourrait procéder différemment, chaque noeud possédant une masse propre, déterminable par la connaissance de la constitution de la région qu'il représente. Ces informations de constitution peuvent faire partie du jeu de données-image formant l'image numérique 3D de l'objet. Mais elles peuvent également être fournies séparément.

Il est donc possible de déterminer l'accélération $a_i$ de chaque masse ou noeud $N_i$, et par conséquent de remonter dans un premier temps à sa vitesse $v_i$, puis dans un second temps à sa position $x_{i+1}$ à un instant $t+\Delta t$ en effectuant des intégrations, par exemple numériques. C'est ce calcul de toutes les positions $x_{i+1}$ à l'instant $t+\Delta t$ qui va fournir les déplacements de chaque noeud et par conséquent la déformation de la maille volumique. Pour ce faire, on pourra utiliser des méthodes de type Euler, ou bien Runge-Kutta d'ordre 2, ou plus préférentiellement d'ordre 4.

La méthode d'Euler est celle qui est la plus couramment employée. Elle consiste, par exemple, à partir d'une équation différentielle $dx / dt = f(x,t)$, avec comme condition initiale $x = x_0$ à l'instant $t = 0$. On choisit alors un pas temporel $\Delta t$ tel que $t_i = i\Delta t$, avec $i = 0,1,2...$ Connaissant la position d'un noeud $x_i$ à l'instant $t_i$, il est alors possible d'en déduire la position de ce même noeud à l'instant $t_{i+1} = t+\Delta t$ (voir formule (9) en annexe).

Deux additions, deux multiplications et une évaluation des forces sont alors nécessaires pour obtenir la position d'un noeud N ainsi que sa vitesse à un instant $t+\Delta t$, à partir de son accélération à l'instant t. La vitesse et la position du noeud sont données à titre d'exemple dans les formules (10) en annexe.

La formule de Runge-Kutta d'ordre 4 est actuellement préférée en raison notamment de sa précision numérique. Elle repose, par exemple, sur les formules (11) données en annexe.

Dans cette méthode, il est nécessaire d'évaluer quatre fois les forces externes et internes en chaque noeud.

Bien entendu, d'autres techniques d'intégration, notamment numériques, peuvent être utilisées.

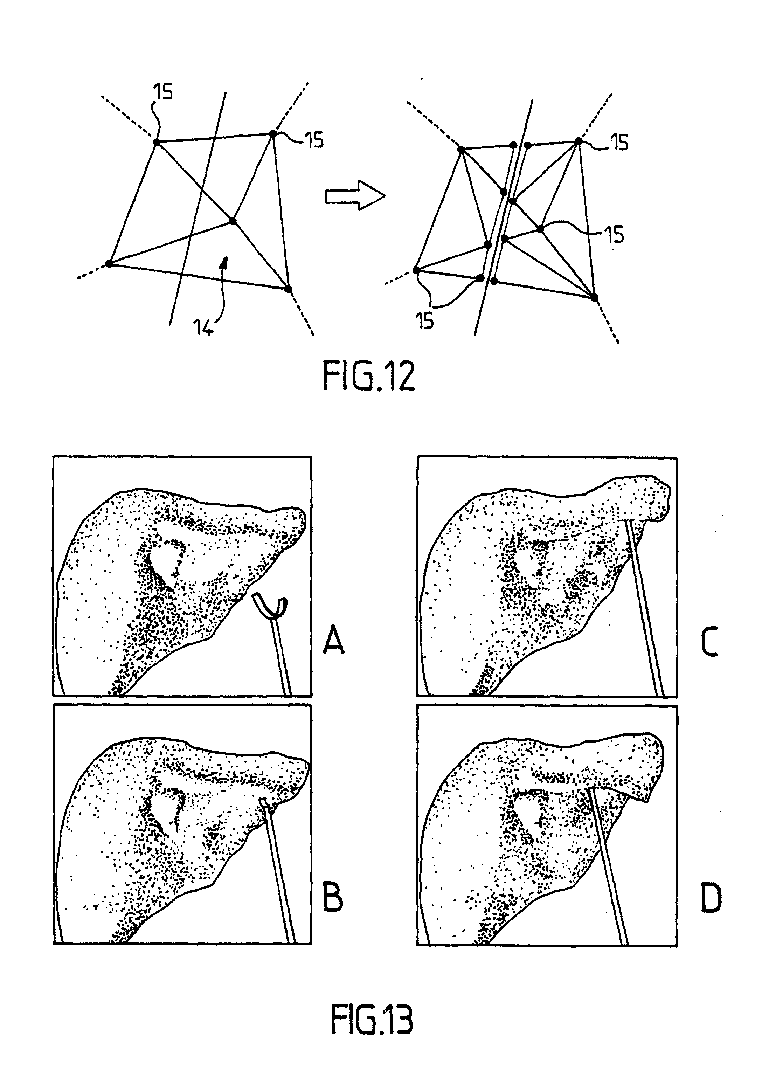

Sur la partie gauche de la figure 11 se trouve représenté l'enchaînement des étapes qui permettent de déterminer le déplacement de chaque noeud de la maille volumique, ou de la partie sélectionnée de celle-ci, à partir du déplacement vectoriel de l'extrémité 7 de la tige 6 de l'outil virtuel relativement à l'objet 3D, dû à l'action de l'opérateur sur le joystick 5. Ce déplacement vectoriel est fourni par l'interface-utilisateur à retour de force 4, via le bus ISA, de préférence en même temps que la position de l'extrémité 7.

Dès que le module de détection de collision 18 a déterminé un point d'intersection entre "l'outil" et le maillage surfacique, le module de forces internes 16 peut commencer à déterminer les forces internes exercées sur les noeuds de la première partie du maillage volumique.

Pour ce faire, il applique sur chaque noeud $N_C$ de la maille surfacique de collision détectée (ici il y en trois du fait de la forme triangulaire de la maille) un déplacement vectoriel égal à celui fourni par l'interface-utilisateur 4 qui définit le déplacement de l'outil. Puis, il détermine la force interne exercée sur chaque noeud de la première partie du maillage en utilisant les formules (3) ou (7) selon les forces externes choisies par l'opérateur et/ou l'interface-utilisateur 4. Cette détermination fait appel aux tenseurs de noeud et de liaison, $[T_{ii}]$ et $[T_{ij}]$, précédemment déterminés et mémorisés. En fait, lors de la première itération, bien que l'on calcule les forces internes appliquées en chaque noeud, seules celles des noeuds voisins des noeuds "de collision" $N_C$ sont non nulles, étant donné que les déplacements des autres noeuds sont nuls à ce stade du calcul. On en déduit l'accélération, la vitesse et le déplacement des noeuds premiers voisins, et par conséquent leurs nouvelles positions.

Ces nouvelles positions des noeuds déplacés sont alors figées pour la suite du calcul, et le module de forces internes 16 réitère son calcul de façon à déterminer en chaque noeud de la première partie (ici toute la maille), la force interne (non nulle) qui lui est appliquée, et par conséquent son déplacement. Le calcul des forces internes s'est donc effectué selon un modèle de type "propagation de contraintes". On connaît alors la déformation induite par le déplacement vectoriel de "l'outil" virtuel sur la maille volumique représentant l'objet 3D.

Entre deux boucles de calcul des forces internes et des déplacements dus à un déplacement vectoriel de "l'outil", c'est à dire en cours de propagation de contraintes, il est particulièrement avantageux de tenir compte d'informations transmises par l'interface-utilisateur 4, ou définies par l'opérateur, portant sur le type d'outil manoeuvré et par conséquent le type d'intervention effectuée. En effet, de telles informations peuvent indiquer au module de forces internes 16 que l'action de l'outil est destinée à couper, ou inciser, ou supprimer de la matière. Ainsi, après une itération au cours de laquelle on a déterminé des forces internes (non nulles) exercées sur certains noeuds, le module de forces internes 16 peut supprimer les liaisons qui sont dans le plan de coupe d'un outil d'incision ou retirer la matière (matérialisée par des mailles volumiques, ici des tétraèdres) qui se trouve dans la zone d'interaction de "l'outil" virtuel, sur la base des informations d'action qui lui sont fournies par le module de détection de collision 18 et l'interface-utilisateur 4.

Dans ce cas, un certain nombre de liaisons et/ou de noeuds sont supprimés. Le module de forces internes doit alors mettre à jour les tenseurs de noeud et les tenseurs de liaison en fonction de la ou des liaison(s) et/ou noeud (s) supprimés. Cette prise en compte des informations précitées tient lieu de critère de suppression.

Les outils virtuels capables de découpe (ou d'incision) et/ou de retrait de matière sont par exemple des scalpels, pinces coupantes, ou bien bistouri mécanique ou électrique, ou bien encore lasers.

Par ailleurs, il est également particulièrement avantageux qu'entre deux boucles de calcul le critère de suppression soit capable d'effectuer un test portant sur l'intégrité des liaisons entre noeuds dont les déplacements viennent d'être déterminés et sont désormais figés.

Ce test a pour but de déterminer si certains déplacements sont tels que dans la réalité ils auraient causé la rupture d'une ou plusieurs liaisons et/ou la suppression d'un ou plusieurs noeuds et donc d'un ou plusieurs tétraèdres (ou mailles volumiques). Le test consiste en la comparaison des déplacements à un seuil de rupture de liaison prédéterminé. Ce test pourra porter, par exemple, sur la variation de volume de la maille volumique comprenant la maille à supprimer, et/ou la variation de longueur des liaisons de la maille volumique comprenant la liaison à supprimer.

Si aucune liaison ne doit être supprimée, le module de forces internes 16 passe à l'itération suivante (boucle suivante) de façon à poursuivre le calcul des forces internes (poursuite de la propagation de contraintes).

En revanche, si le test indique qu'au moins une liaison doit être détruite, c'est-à-dire si l'intensité du déplacement dépasse le seuil prédéterminé, alors le module de forces internes 16 procède à une mise à jour des tenseurs de noeuds $[T_{ii}]$ et des tenseurs de liaison $[T_{ij}]$ de la maille volumique ou de la première partie de celle-ci, en tenant compte des déplacements calculés. La valeur de certains tenseurs de noeud comme de liaison peut alors devenir nulle. C'est notamment le cas, lorsque les quatre liaisons qui relient un noeud au quatre autres noeuds d'un tétraèdre donné se trouvent rompues. Dans ce cas, il faut supprimer un noeud de la maille volumique, ou plusieurs si cela s'impose, ainsi que toutes les liaisons associées.

L'opération ne s'arrête pas à ce stade, étant donné que, pour des raisons d'équilibre de la maille volumique déformée, il faut que cette dernière conserve sa structure générale de départ au niveau de ses maillages surfacique et volumique. Or, le retrait d'un noeud, ou la rupture d'une liaison provoquent des modifications d'une ou plusieurs mailles, celles-ci n'étant plus, dans l'exemple illustré, tétraédriques ou triangulaires selon que l'on parle de maille volumique ou de maille surfacique. Un tel cas est illustré sur la figure 12 sur laquelle l'action de l'extrémité 7 de l'outil a provoqué la rupture de quatre liaisons suivant un plan de coupe particulier. Chacune des quatre liaisons se trouvant divisée en deux, il est alors nécessaire de rajouter des noeuds, et par conséquent des liaisons, de façon à reconstituer des mailles tétraédriques dans la zone incisée. En d'autres termes il faut remailler localement le maillage volumique.

Étant donné que l'ajout de noeuds a pour conséquence d'accroître la masse totale de l'objet 3D, il est alors nécessaire de modifier la masse de tous les autres noeuds du maillage volumique, ce qui peut être fait par une répartition homogène.

De plus, l'ajout de noeuds entraîne l'ajout de liaisons pour que les mailles conservent leurs formes générales, ici triangulaires ou tétraédriques. Il faut par conséquent que le module de forces internes 16 crée et/ou détruise des matrices de rigidité élémentaires $[K^e]$ et des tenseurs de noeud et de liaison, et recalcule les matrices de rigidité élémentaires et les tenseurs de noeud et les tenseurs de liaison précédemment calculés, de sorte que la poursuite des calculs des forces internes exercées sur les noeuds puisse se faire en tenant compte de ces modifications.

Il est clair qu'il est particulièrement avantageux que le module de collision 18 puisse mettre à jour ses multiplets au fur et à mesure de l'évolution (déformation) de la partie de la maille volumique.

Dès que le calcul des forces internes et déplacements est considéré par le module de forces internes comme terminé pour la valeur de déplacement vectoriel de l'outil fournie, le module de rafraîchissement 17 procède à la détermination des nouvelles données-image de l'objet et de la matérialisation de l'outil en vue de leur affichage, tandis que dans le même temps, le module de forces internes recommence un nouveau calcul avec un nouveau déplacement vectoriel de l'outil appliqué éventuellement à d'autres noeuds que ceux sur lesquels ils ont été initialement appliqués.

Sensiblement simultanément à la détermination des nouvelles données-image de l'objet et de "l'outil", un module de réaction 20, de préférence intégré dans l'unité de contrôle 1, détermine la force de réaction de l'objet, laquelle correspond à sa déformation (déplacements des noeuds) estimée à partir des forces internes. Pour chaque noeud déplacé par l'outil, on connaît sa position initiale (à t=0) et sa position en cours (à l'instant t). On connaît par ailleurs les tenseurs associés à ce noeud et les liaisons qui lui sont associées, ce qui permet d'appliquer la formule (3) donnée en annexe.

La force de réaction est alors transmise à l'interface-utilisateur à retour de force (LIE) de sorte qu'elle génère sur le joystick force (ou retour de force) sensiblement équilibrée par ladite force de réaction. Cela permet de transmettre à l'opérateur des réactions physiques de l'objet, ce qui est essentiel à un bon contrôle de la manoeuvre d'intervention.

Comme il ressort de la description ci-avant, la technique de calcul des masses/tenseurs permet de simuler tous types de déformations, qu'elles soient de type géométrique, de type incision ou découpe, de type déchirement ou fracture, ou bien encore de type retrait de matière.

On a représenté sur la figure 13 quatre images d'un foie humain soumis à l'action d'un outil virtuel de type pinces coupantes. Ici l'action est une simple compression.

Afin d'améliorer la qualité de l'image, on peut envisager, avant chaque mise à jour de la scène affichée, de réitérer un certain nombre de fois le calcul complet de la déformation de la maille volumique, et par conséquent les tests portant sur les suppressions de noeud et de liaison, ainsi que ceux portant sur les valeurs des composantes des tenseurs. Ainsi, tant que le nombre d'itérations est inférieur à un seuil choisi, et que le temps de calcul reste inférieur au temps nécessaire au rafraîchissement des images sur les moyens d'affichage, alors on peut recommencer la boucle. En revanche, si tel n'est pas le cas, on procède à la mise à jour de la scène affichée.

Toutes les principales étapes de la technique masses/tenseurs sont illustrées dans le diagramme de la figure 11.

L'invention propose également un procédé électronique de traitement de données-image pour la mise en oeuvre du dispositif précité, dans lequel on prévoit les principales étapes suivantes:

- tout d'abord, prévoir une interface-utilisateur 4 capable de donner un retour de force, conformément aux réactions d'un outil,
- puis, estimer un point d'intersection (ou de collision) entre une droite matérialisant un déplacement tiré de l'action définie par l'interface-utilisateur et le maillage surfacique,
- puis, établir un champ de forces internes entre des noeuds d'une première partie au moins d'un maillage volumique fonction d'un maillage surfacique d'un objet 3D apparaissant dans un jeu de données-image, à partir d'une loi de déformation, par exemple de type élastique linéaire volumique, d'un déplacement, induit par une action définie par l'interface-utilisateur et représentative d'une manoeuvre de l'outil, appliqué aux noeuds appartenant à la maille surfacique contenant le point d'intersection, de conditions aux limites, et de tenseurs de noeud et de tenseurs de liaison issus respectivement pour chaque noeud et chaque liaison de cette première partie au moins, de matrices de rigidité propres à chaque maille volumique d'au moins la première partie et fonction de la loi de déformation,
- ensuite, déterminer la force de réaction de l'objet qui correspond à sa déformation estimée à partir des forces internes, de sorte que la force générée par l'interface-utilisateur soit sensiblement équilibrée par cette force de réaction,

**-**  et enfin, calculer de nouvelles données-image de l'objet, en présence des déformations estimées, complétées de la représentation de l'outil.

Dans certains cas complexes, où le nombre de données-image formant l'image numérique tridimensionnelle d'un objet 3D est très important, le temps nécessaire au calcul des forces internes et de la déformation de l'intégralité du maillage volumique peut devenir supérieur au temps de rafraîchissement des images sur les moyens d'affichage (ici un moniteur). Il en résulte que l'application de la technique décrite ci-avant ne peut être faite sur l'intégralité de l'objet 3D. C'est pourquoi le dispositif selon l'invention peut appliquer aux données-images une seconde méthode dite hybride dans laquelle la technique des masses/tenseurs ne va être appliquée qu'à une première partie du maillage volumique, tandis que la partie complémentaire, dite seconde partie, de ce maillage volumique va être traitée à l'aide d'une seconde technique de calcul en temps réel reposant par exemple sur une approche de type éléments finis, faisant appel à des pré-calculs mémorisés. Cette seconde technique est notamment décrite dans l'article déjà cité de S. Cotin, H. Delingette, M. Bro-Nielsen et N. Ayache, "Geometric and physical representations for a simulator of hepatic surgery", publié dans les actes de la Conférence Medecine meets with virtual reality de janvier 1996.

Dans ce qui suit, on appellera première partie la partie du maillage volumique à laquelle est appliquée la technique des masses/tenseurs, et seconde partie la partie complémentaire de la première partie, à laquelle est appliquée la technique des éléments finis via des pré-calculs mémorisés.

Dans le modèle hybride on subdivise le maillage volumique (initial ou final) en au moins deux domaines. Il est clair que l'on pourrait envisager une subdivision en trois domaines, voire plus, grâce à un traitement, par exemple en parallèle, des différents domaines. Cette subdivision en domaines peut être effectuée par le dispositif selon l'invention, lorsque celui-ci comporte un module de maillage spécialisé du type de celui décrit précédemment, mais il peut également être effectué en dehors du dispositif dans le cas contraire.

Qu'elle soit faite par un module externe ou bien par un module interne au dispositif, la subdivision en domaines résulte d'une sélection par un opérateur ou d'une détection automatique résultant d'un critère prédéterminé appliqué aux données-image de l'objet 3D. Le critère pourra être notamment une comparaison d'intensité entre les différentes données-image ou bien entre ces données-image et un seuil, par exemple dans le cas d'une tumeur, ou une détection d'un paramètre physique ou anatomique contenu dans lesdites données-image de l'objet 3D, et désignant des zones complexes dans lesquelles se trouvent des sous-structures comme par exemple des tumeurs.

On peut envisager que le maillage soit subdivisé en une multiplicité de régions, par exemple six ou sept, et que celle dans laquelle est détectée la collision avec "l'outil" soit désignée automatiquement comme première partie, la partie complémentaire formant alors la seconde partie du maillage volumique.

Le dispositif pourra comprendre un module spécifique de partitionnement, différent du module de maillage, pour déterminer la subdivision en domaines. Celui-ci sera de préférence intégré dans le module de forces internes 16.

Dans le modèle hybride, une fois la subdivision en parties effectuée, le module de forces internes 16 débute le calcul des forces internes de l'intégralité du maillage volumique de l'objet 3D. Ce calcul peut débuter soit par la première partie du maillage, à l'aide de la technique masses/tenseurs, soit par la seconde partie du maillage, à l'aide de la technique des éléments finis via des pré-calculs (technique dite "des pré-calculs") qui repose sur deux principes dits de superposition et de linéarité.

Le déplacement vectoriel de l'outil induit un déplacement vectoriel de certains noeuds du maillage volumique, lequel est considéré comme un multiple d'un déplacement vectoriel élémentaire. Puis, le déplacement total de chaque autre noeud i (ceux sur lesquels l'action de l'outil n'est pas directement exercée) est déterminée en effectuant une sommation (principe de superposition) des contributions des déplacements de tous les noeuds j ayant subis un déplacement.

Afin de mettre en oeuvre ce principe de superposition, il faut déterminer une table de pré-calcul de n x n tenseurs de déformation, où n représente le nombre total de noeuds du maillage, ou d'une partie de celui-ci (par exemple uniquement les noeuds de la surface). Pour ce faire, on applique un déplacement élémentaire en un noeud donné, puis on calcul la déformation que ce déplacement induit sur tous les autres noeuds du maillage. On en déduit n premiers tenseurs de déformation élémentaires, un pour chaque noeud. Puis on recommence les deux opérations précitées en appliquant le déplacement élémentaire à un autre noeud du maillage, ce qui fournit n seconds tenseurs de déformation. On renouvelle ces deux opérations pour les n noeuds du maillage, jusqu'à obtention des n x n tenseurs de déformation que l'on mémorise sous forme de table dite de pré-calcul.

On dispose alors d'une source de renseignements qui permet de savoir instantanément la déformation induite sur la maille par un déplacement élémentaire d'un noeud donné. Il n'y a plus alors qu'à déterminer le rapport entre le déplacement vectoriel du noeud et le déplacement élémentaire, puis à multiplier le déplacement des noeuds du maillage mémorisé dans la table par ce rapport (principe de linéarité). En d'autres termes, le déplacement total d'un noeud $N_i$ est obtenu en sommant les contributions de tous les tenseurs de déformations $T'_{ij}$ désignés par l'indice i dans la table $(T'_{iO}, T'_{i1}, T'_{i2}, ..., T'_{in})$ sans oublier de multiplier ces contributions par le rapport.

Des éléments descriptifs plus détaillés de la seconde technique dite des pré-calculs sont indiqués, notamment, dans la publication de S.Cotin, H.Delingette et N.Ayache, "Real-time non linear elastic deformations of soft tissues for surgery simulation", Rapport de recherches de l'INRIA, qui sera rendue publique après dépôt de la présente Demande de Brevet.

Bien entendu, comme dans la technique des masses/tenseurs, la seconde technique tient compte des conditions aux limites, et autres forces auxiliaires et/ou externes.

Quelle que soit la partie du maillage par laquelle débute le calcul des forces internes, il faut tenir compte des noeuds "de connexion" 19 (voir figure 14) qui se trouvent placés à l'interface entre les deux parties, et qui par conséquent appartiennent en même temps à ces deux parties. Selon l'invention, les noeuds de connexion définissent des conditions aux limites et par conséquent ils sont des paramètres de la déformation du maillage complet.

Si l'on raisonne à partir d'un début de détermination des forces internes sur la première partie (à l'aide de la technique des masses/tenseurs), mais on pourrait faire l'inverse, on détermine les forces internes, et par conséquent les déplacements, de tous les noeuds de la première partie du maillage, y compris ceux des noeuds de connexion. Les déplacements de ces noeuds vont alors permettre de déterminer à l'aide de la table n x n de tenseurs de déformation $T'_{ij}$ pré-calculés et mémorisés, selon la seconde technique décrite précédemment, les déplacements de tous les noeuds de la seconde partie du maillage. Cela fournit de nouvelles conditions aux limites (forces externes) pour la première partie du maillage, lesquelles vont être prises en compte pour recalculer les forces internes appliquées en chaque noeud de la première partie, et par conséquent les déplacements de ses noeuds, y compris ceux des noeuds de connexion, ce qui fournit de nouvelles conditions aux limites pour la seconde partie du maillage qui vont permettre à leur tour de recalculer les déplacements des noeuds de la seconde partie.

On réitère cette procédure, de préférence, jusqu'à obtention d'un équilibre entre les deux parties du maillage, au niveau des forces exercées sur les noeuds de connexion. Cet équilibre peut être fixé par un seuil de convergence, ou bien par un nombre d'itération "flottant" dépendant du temps de calcul autorisé, lequel doit être impérativement inférieur au temps nécessaire au rafraîchissement d'une image (fréquence supérieure à 20 Hz). La boucle d'animation du modèle hybride est illustrée sur la figure 15 où les maillages M1 et M2 représentent respectivement les première et seconde parties du maillage volumique.

Il est clair que le module de forces internes 16 tient compte des suppressions et ajouts de liaisons et/ou de noeuds lorsqu'il utilise le modèle hybride. Par conséquent, les tenseurs de noeud et de liaison utilisés dans la première technique masses/tenseurs sont réactualisés en temps réel.

Dès que le calcul des forces internes et déplacements est considéré par le module de forces internes 16 comme terminé pour une valeur de déplacement vectoriel de l'outil, ledit module de rafraîchissement 17 procède à la détermination des nouvelles données-image de l'objet et de la matérialisation de l'outil en vue de leur affichage, tandis que dans le même temps, le module de forces internes 16 recommence un nouveau calcul avec un nouveau déplacement vectoriel de l'outil appliqué éventuellement à d'autres noeuds que ceux sur lesquels ils ont été initialement appliqués.

Il est clair que dans le cas d'un modèle hybride, il est particulièrement avantageux que le module de collision 18 définisse des sous-tables de multiplets pour chaque partie de la maille volumique. Par ailleurs, il est particulièrement avantageux, dans un souci de précision dans la détection des points de collision, que les multiplets des sous-tables soient mis à jour au fur et à mesure de l'évolution (déformation) des différentes parties de la maille volumique.

Le dispositif selon l'invention peut être implanté dans une mémoire, par exemple de masse, d'un ou plusieurs moyens de calcul de type station de travail et/ ou ordinateur, sous la forme de modules logiciels.

A toutes fins utiles, il est précisé que des éléments descriptifs plus détaillés sont indiqués dans la thèse de doctorat de S.Cotin, "Modèles anatomiques déformables en temps-réel - Application à la simulation de chirurgie avec retour d'effort", soutenue le 19 novembre 1997, ainsi que dans la publication déjà citée "Real-time non linear elastic deformations of soft tissues for surgery simulation", de S.Cotin, H.Delingette et N.Ayache. Ces documents seront rendus public après dépôt de la présente Demande de Brevet.

L'invention ne se limite pas aux modes de réalisation décrits ci-avant, seulement à titre d'exemple, mais elle englobe toutes les variantes que pourra envisager l'homme de l'art dans le cadre des revendications ci-après.

Ainsi, on a décrit un dispositif de traitement d'image 3D, et le procédé associé, dans lesquels l'action sur un outil était induite par la manoeuvre d'un "joystick" par un opérateur, puis définie par l'interface-utilisateur. Mais, on peut envisager que l'action sur l'outil soit directement définie par l'interface-utilisateur, cette action étant mémorisée et décomposable en sous-actions élémentaires, l'opérateur n'intervenant plus que pour décider du choix de certaines sous-actions élémentaires, par exemple en vue d'une formation (ou apprentissage).

Par ailleurs, on a décrit des dispositifs et le procédé associé destinés à traiter des images en particulier médicales, et notamment du foie. Mais il est clair que l'invention n'est pas limitée à ce seul domaine. Elle s'applique également à d'autres secteurs du domaine médical, ainsi qu'aux domaines non médicaux pour lesquels le traitement en temps réel d'images d'objets 3D sur lesquels une simulation d'intervention, au sens le plus large du terme, revêt un intérêt particulier aussi bien sur le plan de l'enseignement des techniques d'intervention que sur le plan du perfectionnement ou de la mise au point de nouvelles techniques d'intervention.

De plus on a décrit des modèles de traitement dans lesquels les matrices et tenseurs étaient calculés à partir d'une loi de déformation élastique linéaire volumique. Cependant, d'autres types de lois de déformation peuvent être utilisés, et notamment des lois de type non linéaire.

Enfin, on a décrit un modèle "hybride" faisant appel à deux techniques différentes dont une première technique de calcul en temps réel appelée "masses/tenseurs", la seconde technique étant dans l'exemple choisi une technique de calcul en temps réel dite "des pré-calculs" reposant sur une approche par éléments finis. Mais, il est clair que toute autre seconde technique pourra être envisagée, qu'elle fasse appel ou non à des pré-calculs, pourvu qu'elle permette un traitement des données-image compatible avec une simulation dynamique d'une intervention en temps réel.

Annexe

\* Formules (1) :

$$code = x + y * N_{cells\ x} + z * N_{cells\ y} * N_{cells\ x}$$

$$x = int(\frac{Px - bmin_x}{cell_{width\ x}})$$

$$y = int(\frac{Py - bmin_y}{cell_{width\ y}})$$

$$z = int(\frac{Pz - bmin_z}{cell_{width\ z}})$$

- "int" : fonction donnant la partie entière de son argument,
- $bmin_i$ (i=x,y,z) : bornes inférieures de l'espace englobant l'objet,
- $cell_{width\ i}$ (i=x,y,z) : dimensions d'une cellule volumique,
- $N_{cells\ i}$ (i=x,y) : nombres de cellules volumiques dans les directions de l'espace x et y.

\* Formule (2) :

$$F_i^{int}(t) = [M]\ u$$

- u : vecteur de dimension $3*(N_v+1)$ représentant le déplacement du noeud $N_i$ et de ses voisins,
- $N_v$ : nombre de voisins du noeud $N_i$, et
- [M] : matrice de déformation de dimension $3*3*(N_v+1)$ représentant la loi de déformation de l'objet (connue par ailleurs).

\* Formule (3) :

$$F_i^{int} = [T_{ii}]\ \Delta x_i + \sum_{j \in v} [T_{ij}]\ \Delta x_j$$

\* Formule (4) :

$$[K^e] = Volume\ (T)\ [\Gamma_T]\ ^t[E_T]\ [\Gamma_T]$$

- $[E_T]$ est, par exemple, donné par la matrice :

$$[\mathbf{E_T}] = \begin{vmatrix} \lambda+2\mu & 0 & 0 & 0 & \lambda & 0 & 0 & 0 & \lambda \\ 0 & \mu & 0 & \mu & 0 & 0 & 0 & 0 & 0 \\ 0 & 0 & \mu & 0 & 0 & 0 & \mu & 0 & 0 \\ 0 & \mu & 0 & \mu & 0 & 0 & 0 & 0 & 0 \\ \lambda & 0 & 0 & 0 & \lambda+2\mu & 0 & 0 & 0 & \lambda \\ 0 & 0 & 0 & 0 & 0 & \mu & 0 & \mu & 0 \\ 0 & 0 & \mu & 0 & 0 & 0 & \mu & 0 & 0 \\ 0 & 0 & 0 & 0 & 0 & \mu & 0 & \mu & 0 \\ \lambda & 0 & 0 & 0 & \lambda & 0 & 0 & 0 & \lambda+2\mu \end{vmatrix}$$

- $\lambda$ et $\mu$ : coefficients de LAMÉ,

- $[\Gamma_T]^t$ est donné, par exemple, par la matrice :

$$[\mathbf{\Gamma_T}]^t = \begin{vmatrix} \alpha11 & \alpha12 & \alpha22 & 0 & 0 & 0 & 0 & 0 & 0 \\ \alpha21 & \alpha22 & \alpha23 & 0 & 0 & 0 & 0 & 0 & 0 \\ \alpha31 & \alpha32 & \alpha33 & 0 & 0 & 0 & 0 & 0 & 0 \\ \alpha41 & \alpha42 & \alpha43 & 0 & 0 & 0 & 0 & 0 & 0 \\ 0 & 0 & 0 & \alpha11 & \alpha12 & \alpha22 & 0 & 0 & 0 \\ 0 & 0 & 0 & \alpha21 & \alpha22 & \alpha23 & 0 & 0 & 0 \\ 0 & 0 & 0 & \alpha31 & \alpha32 & \alpha33 & 0 & 0 & 0 \\ 0 & 0 & 0 & \alpha41 & \alpha42 & \alpha43 & 0 & 0 & 0 \\ 0 & 0 & 0 & 0 & 0 & 0 & \alpha11 & \alpha12 & \alpha22 \\ 0 & 0 & 0 & 0 & 0 & 0 & \alpha21 & \alpha22 & \alpha23 \\ 0 & 0 & 0 & 0 & 0 & 0 & \alpha31 & \alpha32 & \alpha33 \\ 0 & 0 & 0 & 0 & 0 & 0 & \alpha41 & \alpha42 & \alpha43 \end{vmatrix}$$

- $\alpha_{ji}$ : premières dérivées partielles des coordonnés barycentriques $\lambda_j$ (x) d'un point x situé à l'intérieur d'un tétraèdre T :

$$\frac{\delta\lambda_j(x)}{\delta x_i} = \alpha_{ji,}$$

$i = 1,2,3; j = 1,2,3,4$

* Formules (5) :

a) pour le tenseur de force $[T_{ii}]$ :

$$T_{k,l} \leftarrow T_{k,l} + \sum_{i=1}^{4} K^e_{s_i+4k, s_i+4l} \; ; \; k = 1,2,3; \; l = 1,2,3$$

- $s_i = \text{local}(m_i)$ : indice local du noeud $N_i$,
- "local" : fonction de transfert affectant un indice local (compris entre 1 et 4 dans le cas d'un tétraèdre et correspondant à l'un des quatre sommets de T) au noeud $N_i$ représenté ici par sa masse $m_i$.

b) pour le tenseur de liaison $[T_{ij}]$ :

$$T_{k,l} \leftarrow T_{k,l} + \sum_{i,j=1}^{4} K^e_{s_i+4k, s_j+4l} \; ; \; k = 1,2,3; \; l = 1,2,3$$

- $s_i = \text{local}(m_i)$ et $s_j = \text{local}(m_j)$

* Formule (6) :

$$F_i^{tension} = \sum_{(i,j)\in v} \{-K_{(i,j)}(l(t)-\alpha_0)\frac{l_{ij}}{l(t)} + k^d_{(i,j)}(\frac{\partial l}{\partial t})\frac{l_{ij}}{l(t)}\} \; si \; i \; et \; j \; s$$

$$F_i^{tension} = 0$$

*sinon*

- $\alpha_0 < l_0$, où $l_0$ est la longueur à vide d'un ressort de raideur choisie selon l'importance de l'amplification souhaitée.

* Formule (7) :

$$F_i^{int} = [T_{ii}] \Delta x_i + \sum_{j\in v} [T_{ij}] \Delta x_j + F_i^{tension}$$

* Formule (8) :

$$F_i(t) = m_i \, a_i(t) = F_i^{int}(t) + F_i^{ext}(t)$$

* Formule (9) :

$$x_i + 1 = x_i + \Delta t^* f(x_i, t_i)$$

* Formules (10) :

$$v_{i+1} = v_i + \Delta t * a_i$$

$$P_{i+1} = P_i + \Delta t * v_i$$

- $P_i$ : position du noeud N à l'instant $t_i$.

* Formules (11) :

$$\delta x_1 = \Delta t . f(x_i, t_i)$$

$$\delta x_2 = \Delta t . f(x_i + \frac{1}{2}\delta x_1, \, t_i + \frac{1}{2}\Delta t)$$

$$\delta x_3 = \Delta t . f(x_i + \frac{1}{2}\delta x_2, t_i + \frac{1}{2}\Delta t)$$

$$\delta x_4 = \Delta t . f(x_i + \delta x_3, t_i + \Delta t)$$

$$x_{i+1} = x_i + \frac{1}{6}\delta x_1 + \frac{1}{3}\delta x_2 + \frac{1}{3}\delta x_3 + \frac{1}{6}\delta x_4$$

- la vitesse $v(t + \Delta t) = v_{i+1}$ et la position $P(t + \Delta t) = P_{i+1}$ se déduisent de l'accélération $a_i$ par les équations suivantes :

$$\delta v_1 = \Delta t . a_i$$

$$\delta P_1 = \Delta t . v_i$$

$$\delta v_2 = \Delta t, a'_i$$

$$\delta P_2 = \Delta t . v'_i$$

$$\delta v_3 = \Delta t. \, a''_i$$

$$\delta P_3 = \Delta t. \, v''_i$$

$$\delta v_4 = \Delta t. \, a'''_i$$

$$\delta P_4 = \Delta t. \, v'''_i$$

$$v_{i+1} = v_i + \frac{1}{6}\delta v_1 + \frac{1}{3}\delta v_2 + \frac{1}{3}\delta v_3 + \frac{1}{6}\delta v_4$$

$$P_{i+1} = P_i + \frac{1}{6}\delta P_1 + \frac{1}{3}\delta P_2 + \frac{1}{3}\delta P_3 + \frac{1}{6}\delta P_4$$

- $a'_i$, $a''_i$ et $a'''_i$ : accélérations calculées respectivement à partir des positions "intermédiaire" $\delta P_1$, $\delta P_2$ et $\delta P_3$.

**Revendications**

1. Dispositif électronique de traitement de données-image, du type comprenant :

   - une interface-utilisateur (4) capable de générer un retour de force, conformément aux réactions d'un outil (6,7),
   - un module de forces internes (16) apte, sur désignation d'un objet 3D apparaissant dans un jeu de données-image, à établir un champ de forces internes entre des noeuds (N) d'un maillage volumique fonction d'un maillage surfacique de cet objet, à partir d'une loi de déformation et d'une action définie par l'interface-utilisateur (4) et représentative d'une manoeuvre dudit outil,
   - un module de réaction (20), pour déterminer la force de réaction de l'objet qui correspond à sa déformation estimée à partir des forces internes, de sorte que la force générée par l'interface-utilisateur (4) soit sensiblement équilibrée par cette force de réaction,
   - un module de rafraîchissement (17), pour calculer de nouvelles données-image de l'objet, en présence de ses déformations estimées, complétées de la représentation dudit outil,

   **caractérisé en ce qu'**il comprend un module de "collision" (18) propre à estimer un point d'intersection entre une droite matérialisant un déplacement tiré de ladite action définie et ledit maillage surfacique, et
   **en ce que** le module de forces internes (16) est agencé pour estimer la force interne exercée sur chaque noeud d'une première partie au moins du maillage volumique de l'objet à partir dudit déplacement appliqué aux noeuds appartenant à la maille surfacique contenant ledit point d'intersection, de conditions aux limites, et de tenseurs de noeud et de tenseurs de liaison issus respectivement pour chaque noeud et chaque liaison de cette première partie au moins, de matrices de rigidité propres à chaque maille volumique d'au moins ladite première partie et fonction de la loi de déformation.

2. Dispositif selon la revendication 1, **caractérisé en ce qu'**il comprend un module de maillage () propre à désigner ledit objet 3D par une détermination d'enveloppe externe, puis à décomposer ladite enveloppe en lesdites mailles surfaciques en vue de la décomposition du volume interne de l'enveloppe en lesdites mailles volumiques.

3. Dispositif selon l'une des revendications 1 et 2, **caractérisé en ce que** ladite enveloppe externe est obtenue par une méthode de segmentation, en particulier par extraction d'iso-surfaces.

4. Dispositif selon l'une des revendications 2 et 3, **caractérisé en ce que** lesdites mailles surfaciques sont des triangles.

5. Dispositif selon la revendication 4, **caractérisé en ce que** lesdites mailles volumiques sont des tétraèdres formés à partir des mailles surfaciques triangulaires.

**6.** Dispositif selon la revendication 5, **caractérisé en ce que** lesdites mailles volumiques sont obtenues par une méthode de type Delaunay-Voronoï.

**7.** Dispositif selon l'une des revendications 2 à 6, **caractérisé en ce que** le module de forces internes (16) est agencé pour calculer les matrices de rigidité de chaque maille volumique, ainsi que lesdits tenseurs de noeud et tenseurs de liaison.

**8.** Dispositif selon l'une des revendications 1 à 7, **caractérisé en ce que** ladite loi de déformation est de type élastique linéaire volumique.

**9.** Dispositif selon l'une des revendications 1 à 8, **caractérisé en ce que** le module de forces internes (16) est agencé pour calculer la force interne exercée sur chaque noeud de ladite première partie du maillage volumique à partir du produit de son tenseur de noeud et du déplacement estimé de ce noeud, et d'une sommation, sur l'ensemble des noeuds voisins possédant une liaison avec ledit noeud, du produit du tenseur de liaison, associé à la liaison entre le noeud voisin et ledit noeud, et du déplacement estimé de ce noeud voisin.

**10.** Dispositif selon l'une des revendications 1 à 9, **caractérisé en ce que** ledit module de forces internes (16) est propre à déterminer les forces internes exercées sur certains au moins des noeuds de la première partie du maillage volumique à partir de la loi de déformation stockée et de forces auxiliaires surfaciques dépendant de paramètres choisis dudit objet, stockés.

**11.** Dispositif selon l'une des revendications 1 à 10, **caractérisé en ce que** ledit module de forces internes (16) est propre à estimer les déplacements des noeuds du maillage volumique à partir du déplacement tiré de l'action définie et de forces externes, en particulier de type force gravitationnelle.

**12.** Dispositif selon l'une des revendications 1 à 11, **caractérisé en ce que** lesdits déplacements estimés des noeuds, autres que ceux de ladite maille surfacique comprenant ledit point d'intersection, sont obtenus par une méthode choisie parmi au moins la méthode d'Euler et la méthode de Runge-Kutta.

**13.** Dispositif selon la revendication 12, **caractérisé en ce que** ladite déformation est obtenue par la méthode de Runge-Kutta dite "d'ordre 4".

**14.** Dispositif selon l'une des revendications 1 à 13, **caractérisé en ce que** ledit module de forces internes (16) est propre, après détermination des déplacements estimés des noeuds, à supprimer au moins une liaison entre des noeuds voisins ou une maille volumique en fonction d'un premier critère, puis à mettre à jour les tenseurs de noeud et les tenseurs de liaisons en fonction de la ou des liaisons supprimées, et enfin à recalculer les forces internes des noeuds d'au moins la première partie du maillage volumique.

**15.** Dispositif selon la revendication 14, **caractérisé en ce que** le premier critère porte sur au moins un paramètre choisi parmi au moins une information transmise par ladite interface-utilisateur (4) et relative au type d'outil (6,7) manoeuvré, une variation de volume de la maille volumique comprenant ladite liaison ou ladite maille volumique à supprimer, et une variation de longueur d'une liaison de la maille volumique comprenant ladite liaison à supprimer.

**16.** Dispositif selon la revendication 15, **caractérisé en ce que** ledit module de forces internes (16) est propre, après détermination des déplacements estimés des noeuds, à supprimer un noeud en cas de détection de suppression de toutes les liaisons qui relient ledit noeud aux noeuds voisins ou en fonction dudit premier critère, puis à mettre à jour les tenseurs de noeud et les tenseurs de liaisons en fonction du noeud et des liaisons supprimés, et enfin à recalculer les forces internes des noeuds d'au moins la première partie du maillage volumique.

**17.** Dispositif selon la revendication 16, **caractérisé en ce que** ledit module de forces internes (16) est propre, en cas de suppression de liaison et/ ou de noeud et avant mise à jour des tenseurs de liaison et de noeud, à ajouter de nouveaux noeuds et de nouvelles liaisons de manière à remailler ledit maillage volumique.

**18.** Dispositif selon l'une des revendications 1 à 17, **caractérisé en ce que** le module de forces internes (16) est agencé pour estimer la force interne exercée sur chaque noeud dudit maillage volumique dudit objet.

**19.** Dispositif selon l'une des revendications 1 à 17, **caractérisé en ce que** le module de forces internes (16) est propre à déterminer les forces internes exercées sur les noeuds d'au moins une seconde partie dudit maillage volumique à partir de conditions aux limites définies par des noeuds dits de connexion placés à l'interface entre les première et seconde parties, et d'une table de tenseurs de déformation, dont chaque tenseur est représentatif de l'influence d'un déplacement élémentaire de chaque noeud d'au moins ladite seconde partie sur chaque autre noeud d'au moins cette seconde partie.

20. Dispositif selon la revendication 19, **caractérisé en ce que** les conditions aux limites servant au calcul des forces internes de la seconde partie sont définies par les forces internes calculées pour lesdits noeuds de connexion en tant que noeuds de la première partie.

21. Dispositif selon la revendication 20, **caractérisé en ce que** le module de forces internes (16) est agencé pour déduire des valeurs des forces internes exercées sur les noeuds de la seconde partie du maillage volumique des valeurs de déplacement des noeuds de connexion de manière à fournir des conditions aux limites permettant à leur tour de calculer les forces internes des noeuds de la première partie.

22. Dispositif selon la revendication 21, **caractérisé en ce que** le module de forces internes (16) est propre à recalculer les valeurs des forces internes exercées sur les noeuds des première et seconde parties du maillage volumique à partir des conditions aux limites déterminées successivement sur les noeuds de connexion, jusqu'à obtention d'une position dite "d'équilibre" des forces internes desdits noeuds de connexion.

23. Dispositif selon l'une des revendications 19 à 22, **caractérisé en ce que** les parties du maillage volumique sont déterminées à partir d'un critère prédéterminé portant au moins sur un paramètre des données-image dudit objet choisi parmi des paramètres physiques et des paramètres anatomiques, en particulier sur une intensité.

24. Dispositif selon l'une des revendications 19 à 23, **caractérisé en ce que** la seconde partie est la partie complémentaire de ladite première partie.

25. Dispositif selon l'une des revendications 19 à 24, **caractérisé en ce qu'**il comprend un module de partitionnement () propre à subdiviser ledit maillage volumique en lesdites parties, dont lesdites première et seconde parties.

26. Dispositif selon l'une des revendications 1 à 25, **caractérisé en ce que** ledit module de détermination de "collision" (18) est propre à déterminer une collision entre au moins deux outils gérés par ladite interface-utilisateur (4).

27. Dispositif selon la revendication 26, **caractérisé en ce que** chaque outil comprend au moins une extrémité d'interaction (7) avec l'objet, laquelle est représentée par au moins un point.

28. Dispositif selon la revendication 27, **caractérisé en ce que** pour la tige de chaque outil est représentée par une multiplicité de points reliés entre eux, ainsi qu'à la ou les extrémités (7), par des segments.

29. Dispositif selon l'une des revendications 27 et 28, **caractérisé en ce que** ledit module de détermination de collision (18) est propre à créer un espace tridimensionnel englobant l'enveloppe externe dudit objet, puis à décomposer ledit espace en cellules volumiques dont le nombre est choisi de sorte que chaque cellule comporte un nombre de noeud dudit maillage volumique de l'objet sensiblement égal au nombre de noeuds des autres cellules, chaque cellule intersectant ladite surface externe comportant au moins un noeud, et enfin à stocker dans des multiplets les coordonnées de chaque noeud en référence à la cellule volumique qui l'englobe.

30. Dispositif selon la revendication 29, **caractérisé en ce que** ledit module de détection de collision (18) est propre à déterminer la présence d'un point de l'outil dans ledit espace par une comparaison entre lesdits multiplets et les coordonnées dudit point, puis la cellule volumique dudit espace dans laquelle se trouve ledit point.

31. Dispositif selon la revendication 30, **caractérisé en ce que** ledit module de détection de collision (18) est propre à déterminer la distance qui sépare ledit point dudit ou desdits noeuds englobés dans ladite cellule volumique de façon à déterminer la plus petite de ces distances, appelée distance minimale, puis à déterminer la distance qui sépare ledit point dudit ou desdits noeuds englobés dans un nombre prédéterminé de cellules volumiques voisines de la cellule volumique dans laquelle il se trouve de façon à comparer ses distances à ladite distance minimale, puis déterminer l'ensemble des mailles surfaciques adjacentes au noeud associé à ladite distance minimale de façon à déterminer si un segment défini par ladite position du point de l'outil et par sa position précédente intersecte l'une au moins de ces mailles surfaciques adjacentes, ce qui permet d'estimer les coordonnées (barycentriques) du point de collision entre ledit objet et ledit outil, en vue de leur transmission audit module de forces internes (16).

**32.** Dispositif selon la revendication 31, **caractérisé en ce que** le module de détection de collision (18) est propre à modifier le contenu desdits multiplets entre deux déterminations de présence de points à l'intérieur desdites cellules volumiques, en cas de détection d'une déformation par ledit module de forces internes (16).

**33.** Dispositif selon l'une des revendications 1 à 32, **caractérisé en ce que** l'interface-utilisateur (4) comprend un ensemble-harnachement (5) manoeuvrable par au moins une main d'opérateur pour simuler la manoeuvre dudit outil.

**34.** Dispositif selon l'une des revendications 1 à 33, **caractérisé en ce qu'**il comprend des moyens d'affichage (3) couplés au module de rafraîchissement (17) pour afficher en temps réel sous forme d'image au moins les données-image de l'objet et d'une représentation de l'outil.

**35.** Dispositif selon l'une des revendications 1 à 34, **caractérisé en ce que** le jeu de données-image représente une image numérique tridimensionnelle d'une région comportant au moins un objet 3D, dont l'objet désigné.

**36.** Dispositif selon la revendication 35, **caractérisé en ce que** l'image numérique est une image médicale.

**37.** Procédé électronique de traitement de données-image, du type comprenant les étapes :

- prévoir une interface-utilisateur (4) capable de générer un retour de force, conformément aux réactions d'un outil (6,7),
- établir, à partir d'une loi de déformation et d'une action définie par l'interface-utilisateur (4) et représentative d'une manoeuvre dudit outil, un champ de forces internes entre des noeuds d'un maillage volumique fonction d'un maillage surfacique d'un objet 3D apparaissant dans un jeu de données-image,
- déterminer la force de réaction de l'objet qui correspond à sa déformation estimée à partir des forces internes, de sorte que la force générée par l'interface-utilisateur (4) soit sensiblement équilibrée par cette force de réaction,
- calculer de nouvelles données-image de l'objet, en présence des déformations estimées, complétées de la représentation dudit outil,

   **caractérisé en ce que** l'on prévoit une étape dans laquelle on estime un point d'intersection entre une droite matérialisant un déplacement tiré de ladite action définie et ledit maillage surfacique, et **en ce que** l'on estime la force interne exercée sur les noeuds d'une première partie au moins du maillage volumique de l'objet, à partir du déplacement appliqué aux noeuds appartenant à la maille surfacique contenant ledit point d'intersection, de conditions aux limites, et de tenseurs de noeud et de tenseurs de liaison issus respectivement pour chaque noeud et chaque liaison de cette partie au moins, de matrices de rigidité propres à chaque maille volumique d'au moins ladite première partie et fonction de la loi de déformation.

**Claims**

**1.** Electronic device for processing image data, of the type comprising:

- a user interface (4) capable of generating a force feedback, in accordance with the reactions of a tool (6, 7),
- an internal forces module (16) able, on designation of a 3D object appearing in a set of image data, to establish a field of internal forces between nodes (N) of a volume meshing dependent on a surface meshing of this object, on the basis of a deformation law and of an action defined by the user interface (4) and representative of a manoeuvre of the said tool,
- a reaction module (20) for determining the reaction force of the object which corresponds to its deformation estimated on the basis of the internal forces, so that the force generated by the user interface (4) is substantially balanced by this reaction force,
- a refresh module (17) for calculating new image data of the object, in the presence of its estimated deformations supplemented with the representation of the said tool,

   **characterized in that** it comprises a "collision" module (18) able to estimate a point of intersection between a straight line embodying a displacement derived from the said defined action and the said surface meshing, and **in that** the internal forces module (16) is devised so as to estimate the internal force exerted on each node of a first part at least of the volume meshing of the object on the basis of the said displacement applied to the nodes belonging to the surface mesh cell containing the said point of intersection, of boundary conditions, and of node tensors and link tensors emanating respectively for each node and each link of this first part at least, from stiffness matrices specific to each volume mesh cell of at least the said first part and dependent on the deformation law.

2. Device according to Claim 1, **characterized in that** it comprises a meshing module () able to designate the said 3D object by determination of an external envelope, then to decompose the said envelope into the said surface mesh cells with a view to the decomposing of the internal volume of the envelope into the said volume mesh cells.

3. Device according to either of Claims 1 and 2, **characterized in that** the said external envelope is obtained by a method of segmentation, in particular by extracting iso-surfaces.

4. Device according to either of Claims 2 and 3, **characterized in that** the said surface mesh cells are triangles.

5. Device according to Claim 4, **characterized in that** the said volume mesh cells are tetrahedra formed from the triangular surface mesh cells.

6. Device according to Claim 5, **characterized in that** the said volume mesh cells are obtained by a Delaunay-Voronoï type method.

7. Device according to one of Claims 2 to 6, **characterized in that** the internal forces module (16) is devised so as to calculate the stiffness matrices of each volume mesh cell, as well as the said node tensors and link tensors.

8. Device according to one of Claims 1 to 7, **characterized in that** the said deformation law is of volume linear elastic type.

9. Device according to one of Claims 1 to 8, **characterized in that** the internal forces module (16) is devised so as to calculate the internal force exerted on each node of the said first part of the volume meshing on the basis of the product of its node tensor and the estimated displacement of this node, and of a summation, over the set of neighbouring nodes possessing a link with the said node, of the product of the link tensor, associated with the link between the neighbouring node and the said node, and of the estimated displacement of this neighbouring node.

10. Device according to one of Claims 1 to 9, **characterized in that** the said internal forces module (16) is able to determine the internal forces exerted on some at least of the nodes of the first part of the volume meshing on the basis of the stored deformation law and of auxiliary surface forces dependent on stored, chosen parameters of the said object.

11. Device according to one of Claims 1 to 10, **characterized in that** the said internal forces module (16) is able to estimate the displacements of the nodes of the volume meshing on the basis of the displacement derived from the defined action and from external forces, in particular of gravitational force type.

12. Device according to one of Claims 1 to 11, **characterized in that** the said estimated displacements of the nodes, other than those of the said surface mesh cell comprising the said point of intersection, are obtained by a method chosen from among at least the Euler method and the Runge-Kutta method.

13. Device according to Claim 12, **characterized in that** the said deformation is obtained by the so-called "order 4" Runge-Kutta method.

14. Device according to one of Claims 1 to 13, **characterized in that** the said internal forces module (16) is able, after determining the estimated displacements of the nodes, to delete at least one link between neighbouring nodes or a volume mesh cell as a function of a first criterion, then to update the node tensors and the link tensors as a function of the deleted link(s), and lastly to recalculate the internal forces of the nodes of at least the first part of the volume meshing.

15. Device according to Claim 14, **characterized in that** the first criterion pertains to at least one parameter chosen from among at least one cue transmitted by the said user interface (4) and relating to the type of tool (6, 7) manoeuvred, a volume variation of the volume mesh cell comprising the said link or the said volume mesh cell to be deleted, and a length variation of a link of the volume mesh cell comprising the said link to be deleted.

23

**16.** Device according to Claim 15, **characterized in that** the said internal forces module (16) is able, after determining the estimated displacements of the nodes, to delete a node in the event of detecting the deletion of all the links which join the said node to the neighbouring nodes or as a function of the said first criterion, then to update the node tensors and the link tensors as a function of the node and of the deleted links, and lastly to recalculate the internal forces of the nodes of at least the first part of the volume meshing.

**17.** Device according to Claim 16, **characterized in that** the said internal forces module (16) is able, in the event of the deletion of a link and/or of a node and before updating the link tensors and node tensors, to add new nodes and new links in such a way as to remesh the said volume meshing.

**18.** Device according to one of Claims 1 to 17, **characterized in that** the internal forces module (16) is devised so as to estimate the internal force exerted on each node of the said volume meshing of the said object.

**19.** Device according to one of Claims 1 to 17, **characterized in that** the internal forces module (16) is able to determine the internal forces exerted on the nodes of at least a second part of the said volume meshing on the basis of boundary conditions defined by so-called connection nodes placed at the interface between the first and second parts, and of a table of deformation tensors, each tensor of which is representative of the influence of an elementary displacement of each node of at least the said second part on each other node of at least this second part.

**20.** Device according to Claim 19, **characterized in that** the boundary conditions serving in the calculation of the internal forces of the second part are defined by the internal forces calculated for the said connection nodes in the guise of nodes of the first part.

**21.** Device according to Claim 20, **characterized in that** the internal forces module (16) is devised so as to deduce from the values of the internal forces exerted on the nodes of the second part of the volume meshing, values of displacement of the connection nodes in such a way as to provide boundary conditions which in turn make it possible to calculate the internal forces of the nodes of the first part.

**22.** Device according to Claim 21, **characterized in that** the internal forces module (16) is able to recalculate the values of the internal forces exerted on the nodes of the first and second parts of the volume meshing on the basis of the boundary conditions determined in succession on the connection nodes, until a position of so-called "equilibrium" of the internal forces of the said connection nodes is obtained.

**23.** Device according to one of Claims 19 to 22, **characterized in that** the parts of the volume meshing are determined on the basis of a predetermined criterion pertaining at least to a parameter of the image data of the said object chosen from among physical parameters and anatomical parameters, in particular to an intensity.

**24.** Device according to one of Claims 19 to 23, **characterized in that** the second part is the part complementary to the said first part.

**25.** Device according to one of Claims 19 to 24, **characterized in that** it comprises a partitioning module () able to subdivide the said volume meshing into the said parts, including the said first and second parts.

**26.** Device according to one of Claims 1 to 25, **characterized in that** the said "collision" determination module (18) is able to determine a collision between at least two tools managed by the said user interface (4).

**27.** Device according to Claim 26, **characterized in that** each tool comprises at least one end (7) which interacts with the object and is represented by at least one point.

**28.** Device according to Claim 27, **characterized in that** the shank of each tool is represented by a multiplicity of points joined to one another as well as to the end(s) (7), by segments.

**29.** Device according to either of Claims 27 and 28, **characterized in that** the said collision determination module (18) is able to create a three-dimensional space encompassing the external envelope of the said object, then to decompose the said space into volume blocks, the number of which is chosen so that each block comprises a number of nodes of the said volume meshing of the object substantially equal to the number of nodes of the other blocks, each block intersecting the said external surface comprising at least one node, and lastly to store in multiplets the coordinates of each node with reference to the volume block which encompasses it.

**30.** Device according to Claim 29, **characterized in that** the said collision detection module (18) is able to determine the presence of a point of the tool in the said space through a comparison between the said multiplets and the coordinates of the said point, then the volume block of the said space in which the said point lies.

**31.** Device according to Claim 30, **characterized in that** the said collision detection module (18) is able to determine the distance which separates the said point from the said node(s) encompassed in the said volume block so as to determine the smallest of these distances, termed the minimum distance, then to determine the distance which separates the said point from the said node(s) encompassed in a predetermined number of volume blocks neighbouring the volume block in which it lies so as to compare its distances with the said minimum distance, then to determine the collection of surface mesh cells adjacent to the node associated with the said minimum distance so as to determine whether a segment defined by the said position of the point of the tool and by its previous position intersects one at least of these adjacent surface mesh cells, thus making it possible to estimate the (barycentric) coordinates of the point of collision between the said object and the said tool, with a view to their transmission to the said internal forces module (16).

**32.** Device according to Claim 31, **characterized in that** the collision detection module (18) is able to modify the contents of the said multiplets between two determinations of presence of points inside the said volume blocks, in the event of detection of a deformation by the said internal forces module (16).

**33.** Device according to one of Claims 1 to 32, **characterized in that** the user interface (4) comprises a harness (5) manoeuvrable by at least one operator hand so as to simulate the manoeuvring of the said tool.

**34.** Device according to one of Claims 1 to 33, **characterized in that** it comprises display means (3) coupled to the refresh module (17) for displaying in real time in image form at least the image data of the object and of a representation of the tool.

**35.** Device according to one of Claims 1 to 34, **characterized in that** the set of image data represents a three-dimensional digital image of a region comprising at least one 3D object, including the designated object.

**36.** Device according to Claim 35, **characterized in that** the digital image is a medical image.

**37.** Electronic process for processing image data, of the type comprising the steps:

- provide a user interface (4) capable of generating a force feedback, in accordance with the reactions of a tool (6, 7),
- establish, on the basis of a deformation law and of an action defined by the user interface (4) and representative of a manoeuvre of the said tool, a field of internal forces between nodes of a volume meshing dependent on a surface meshing of a 3D object appearing in a set of image data,
- determine the reaction force of the object which corresponds to its deformation estimated on the basis of the internal forces, so that the force generated by the user interface (4) is substantially balanced by this reaction force,
- calculate new image data of the object, in the presence of the estimated deformations supplemented with the representation of the said tool,

    **characterized in that** there is provision for a step in which a point of intersection between a straight line embodying a displacement derived from the said defined action and the said surface meshing is estimated, and **in that** the internal force exerted on the nodes of a first part at least of the volume meshing of the object is estimated, on the basis of the displacement applied to the nodes belonging to the surface mesh cell containing the said point of intersection, of boundary conditions, and of node tensors and link tensors emanating respectively for each node and each link of this part at least, from stiffness matrices specific to each volume mesh cell of at least the said first part and dependent on the deformation law.

**Patentansprüche**

**1.** Elektronische Vorrichtung zur Bilddatenverarbeitung, umfassend:

- eine Benutzerschnittstelle (4), fähig eine Kraftrückleitung zu erzeugen, entsprechend den Reaktionen eines Werkzeugs (6, 7),

- einen Interne-Kräfte-Modul (16), fähig durch Bezeichnung eines in einem Bilddatensatz erscheinenden 3D-Objekts ein Interne-Kräfte-Feld zwischen den Knotenpunkten (N) eines Volumennetzwerks, Funktion eines Oberflächennetzwerks dieses Objekts, zu erstellen aufgrund eines Verformungsgesetzes und einer durch die Benutzerschnittstelle (4) definierten und für ein Manöver des genannten Werkzeugs repräsentativen Aktion,
- einen Reaktionsmodul (20), um die Reaktionskraft des Objekts festzustellen, die seiner aufgrund der internen Kräfte geschätzten bzw. berechneten Verformung entspricht, so dass die durch die Benutzerschnittstelle (4) erzeugte Kraft im Wesentlichen durch diese Reaktionskraft ausgeglichen wird,
- einen Auffrischungsmodul (17), um angesichts seiner berechneten Verformungen neue Bilddaten des Objekts zu berechnen, vervollständigt durch die Darstellung des genannten Werkzeugs,

**dadurch gekennzeichnet, dass** sie einen "Kollisions"-Modul (18) umfasst, fähig einen Schnittpunkt zwischen einer eine Bewegung bzw. Verschiebung materialisierenden Geraden, abgeleitet von der genannten definierten Aktion, und dem genannten Oberflächennetzwerk zu berechnen,

und **dadurch dass** der Interne-Kräfte-Modul (16) eingerichtet ist für die Schätzung bzw. Berechnung der internen Kraft, die auf jeden Knotenpunkt wenigstens eines ersten Teils des Volumennetzwerks des Objekts ausgeübt wird aufgrund der erfolgten Verschiebung der Knotenpunkte, die zu der Oberflächenmasche gehören, die den genannten Schnittpunkt enthält, von Grenzwerten, und von Knotenpunkttensoren und Verbindungstensoren jeweils für jeden Knotenpunkt und jede Verbindung wenigstens dieses ersten Teils, von Steifheitsmatrizen, charakteristisch für jede Volumenmasche wenigstens des genannten ersten Teils und Funktion des Verformungsgesetzes.

2. Vorrichtung nach Anspruch 1, **dadurch gekennzeichnet, dass** es einen Netzwerkmodul () umfasst, fähig das genannte 3D-Objekt durch eine Festlegung der Außenhülle zu bezeichnen und dann die genannte Hülle aufzugliedern in die genannten Oberflächenmaschen hinsichtlich der Aufgliederung des internen Volumens der Hülle in die genannten Volumenmaschen.

3. Vorrichtung nach einem der Ansprüche 1 und 2, **dadurch gekennzeichnet, dass** man die genannte Außenhülle durch ein Segmentierungsverfahren erhält, insbesondere durch das Entnehmen isometrischer bzw. gleicher Flächen.

4. Vorrichtung nach einem der Ansprüche 2 und 3, **dadurch gekennzeichnet, dass** die Oberflächenmaschen Dreiecke sind.

5. Vorrichtung nach Anspruch 4, **dadurch gekennzeichnet, dass** die genannten Volumenmaschen Tetraeder sind, gebildet aus dreieckigen Oberflächenmaschen.

6. Vorrichtung nach Anspruch 5, **dadurch gekennzeichnet, dass** man die genannten Volumenmaschen durch ein Verfahren des Delaunay-Voronoï-Typs erhält.

7. Vorrichtung nach einem der Ansprüche 2 bis 6, **dadurch gekennzeichnet, dass** der Interne-Kräfte-Modul (16) eingerichtet ist, um die Steifheitsmatrizen jeder Volumenmasche sowie die Knotenpunkttensoren und die Verbindungstensoren zu berechnen.

8. Vorrichtung nach einem der Ansprüche 1 bis 7, **dadurch gekennzeichnet, dass** das Verformungsgesetz vom volumenbezogenen linearen elastischen Typ ist.

9. Vorrichtung nach einem der Ansprüche 1 bis 8, **dadurch gekennzeichnet, dass** der Interne-Kräfte-Modul (16) eingerichtet ist für die Berechnung der internen Kraft, ausgeübt auf jeden Knotenpunkt des genannten ersten Teils des Volumennetzwerks aufgrund des Produkts seines Knotenpunkttensors und der berechneten Verschiebung dieses Knotenpunkts, und einer alle benachbarten Knotenpunkte mit einer Verbindung mit dem genannten Knotenpunkt betreffenden Summierung des Produkts des der Verbindung zwischen dem benachbarten Knotenpunkt und dem genannten Knotenpunkt zugeordneten Verbindungstensors und der berechneten Verschiebung dieses benachbarten Knotenpunkts.

10. Vorrichtung nach einem der Ansprüche 1 bis 9, **dadurch gekennzeichnet, dass** der genannte Interne-Kräfte-Modul (16) fähig ist, die internen Kräfte, die auf wenigstens einige der Knotenpunkte des ersten Teils des Volumennetzwerks aufgrund des eingespeicherten Verformungsgesetzes und der Oberflächenhilfs- bzw. -zusatzkräfte ausgeübt werden, die von gewählten, abgespeicherten Parametern dieses Objekts abhängen.

**11.** Vorrichtung nach einem der Ansprüche 1 bis 10, **dadurch gekennzeichnet, dass** der genannte Interne-Kräfte-Modul (16) fähig ist, die Verschiebungen der Volumennetzwerk-Knotenpunkte zu berechnen aufgrund der von der definierten Aktion und den externen Kräften - insbesondere Gravitationskräften - abgeleiteten Verschiebung.

**12.** Vorrichtung nach einem der Ansprüche 1 bis 11, **dadurch gekennzeichnet, dass** man die genannten berechneten Verschiebungen der Knotenpunkte, ausgenommen diejenigen der den genannten Schnittpunkt enthaltenden Oberflächenmasche, durch ein Verfahren erhält, das ausgewählt wird unter wenigstens dem Euler-Verfahren und dem Runge-Kutta-Verfahren.

**13.** Vorrichtung nach Anspruch 12, **dadurch gekennzeichnet, dass** man die Verformung durch das sogenannte "Runge-Kutta-Verfahren vierter Ordnung" erhält.

**14.** Vorrichtung nach einem der Ansprüche 1 bis 13, **dadurch gekennzeichnet, dass** der Interne-Kräfte-Modul (16) fähig ist, nach Festlegung der berechneten Verschiebungen der Knotenpunkte wenigstens eine Verbindung zwischen benachbarten Knoten oder eine Volumenmasche in Abhängigkeit von einem ersten Kriterium wegzulassen, dann die Knotenpunkttensoren und die Verbindungstensoren in Abhängigkeit von der oder den weggelassenen Verbindungen zu aktualisieren, und schließlich die internen Kräfte der Knotenpunkte wenigstens des ersten Teils des Volumennetzwerks neu zu berechnen.

**15.** Vorrichtung nach Anspruch 14, **dadurch gekennzeichnet, dass** das erste Kriterium sich bezieht auf wenigstens einen Parameter, ausgewählt unter wenigstens einer Information, übertragen durch die genannte Benutzer-Schnittstelle (4) und den Typs des betätigten Werkzeugtyp (6, 7) betreffend, auf eine die genannte wegzulassende Verbindung oder Volumenmasche umfassende Volumenveränderung der Volumenmasche, und auf eine die genannte wegzulassende Verbindung umfassende Längenveränderung einer Verbindung der Volumenmasche.

**16.** Vorrichtung nach Anspruch 15, **dadurch gekennzeichnet, dass** der genannte Interne-Kräfte-Modul (16) fähig ist, nach Festlegung der berechneten Verschiebungen der Knotenpunkte einen Knotenpunkt im Falle der Detektion des Weglassens aller Verbindungen, die den genannten Knotenpunkt mit den benachbarten Knotenpunkten verbinden, oder in Abhängigkeit von dem genannten ersten Kriteriums wegzulassen, dann die Knotenpunkttensoren und die Verbindungstensoren in Abhängigkeit des Knotenpunkts und der weggelassenen Verbindungen zu aktualisieren, und schließlich die internen Kräfte der Knotenpunkte wenigstens des ersten Teils des Volumennetzwerks neu zu berechnen.

**17.** Vorrichtung nach Anspruch 16, **dadurch gekennzeichnet, dass** der genannte Interne-Kräfte-Modul (16) fähig ist, im Falle des Weglassens einer Verbindung und/oder eines Knotenpunkts und vor einer Aktualisierung der Verbindungs- und Knotenpunkttensoren neue Knotenpunkte und neue Verbindungen hinzuzufügen, um das genannte Volumennetzwerk neu zu vermaschen.

**18.** Vorrichtungen nach einem der Ansprüche 1 bis 17, **dadurch gekennzeichnet, dass** der Interne-Kräfte-Modul (16) eingerichtet ist, um die auf jeden Knotenpunkt des genannten Volumennetzwerks des genannten Objekts ausgeübte Kraft zu berechnen.

**19.** Vorrichtungen nach einem der Ansprüche 1 bis 17, **dadurch gekennzeichnet, dass** der Interne-Kräfte-Modul (16) fähig ist, die auf die Knotenpunkte wenigstens eines zweiten Teils des genannten Volumennetzwerks wirkenden Kräfte zu bestimmen aufgrund von Grenzwerten, definiert durch sogenannte Verbindungsknotenpunkte, angeordnet an der Schnittstelle zwischen dem ersten und dem zweiten Teil, und einer Verformungstensoren-Tabelle, in der jeder Tensor repräsentativ ist für den Einfluss einer Elementarverschiebung jedes Knotenpunkts wenigstens des genannten zweiten Teil bezüglich jedes anderen Knotenpunkts wenigstens dieses zweiten Teils.

**20.** Vorrichtung nach Anspruch 19, **dadurch gekennzeichnet, dass** die Grenzwerte, die dazu dienen, die internen Kräfte des zweiten Teils zu berechnen, definiert werden durch die für die genannten Verbindungsknoten als Knoten des ersten Teils berechneten internen Kräfte.

**21.** Vorrichtung nach Anspruch 20, **dadurch gekennzeichnet, dass** der Interne-Kräfte-Modul (16) eingerichtet ist, um Werte der internen Kräfte, ausgeübt auf die Knotenpunkte des zweiten Teils des Volumennetzwerks der Verschiebungswerte der Verbindungsknotenpunkte, abzuleiten, um Grenzwerte zu liefern, die ihrerseits ermöglichen, die internen Kräfte der Knotenpunkte des ersten Teils zu berechnen.

**22.** Vorrichtung nach Anspruch 21, **dadurch gekennzeichnet, dass** der Interne-Kräfte-Modul (16) fähig ist, die Werte der internen Kräfte, ausgeübt auf die Knotenpunkte des ersten und zweiten Teils des Volumennetzwerks, zu berechnen aufgrund der sukzessive bezüglich der Verbindungsknoten bestimmten Werte, bis zur Erlangung einer "Gleichgewichtsstellung" der internen Kräfte der Verbindungsknoten.

**23.** Vorrichtung nach einem der Ansprüche 19 bis 22, **dadurch gekennzeichnet, dass** die Teile des Volumennetzwerks aufgrund eines vorher festgelegten Kriteriums bestimmt werden, das sich wenigstens auf einen Parameter der Bilddaten des genannten Objekts bezieht, ausgewählt unter physischen bzw. physikalischen Parametern und anatomischen Parametern, insbesondere bezüglich einer Intensität.

**24.** Vorrichtung nach einem der Ansprüche 19 bis 23, **dadurch gekennzeichnet, dass** der zweite Teil der zu dem genannten ersten Teil komplementäre Teil ist.

**25.** Vorrichtung nach einem der Ansprüche 19 bis 24, **dadurch gekennzeichnet, dass** sie einen Unterteilungsmodul () umfasst, um das genannte Volumennetzwerk in die genannten Teile, die genannten ersten und zweiten Teile, zu unterteilen.

**26.** Vorrichtung nach einem der Ansprüche 1 bis 25, **dadurch gekennzeichnet, dass** der genannte "Kollisionsfeststellungsmodul" (18) fähig ist, eine Kollision zwischen wenigstens zwei Werkzeugen, gesteuert durch die genannte Benutzer-Schnittstelle, festzustellen (4).

**27.** Vorrichtung nach Anspruch 26, **dadurch gekennzeichnet, dass** jedes Werkzeug wenigstens ein durch wenigstens einen Punkt dargestelltes Ende (7) der Wechselwirkung mit dem Objekt hat.

**28.** Vorrichtung nach Anspruch 27, **dadurch gekennzeichnet, dass** der Stiel jedes Werkzeugs durch eine Vielzahl miteinander verbundener Punkten dargestellt wird und das oder die Ende(n) (7) durch Segmente.

**29.** Vorrichtung nach einem der Ansprüche 27 und 28, **dadurch gekennzeichnet, dass** der genannte Kollisionsfeststellungsmodul (18) fähig ist, einen dreidimensionalen Raum zu schaffen, der die Außenhülle des genannten Objekts umgibt, dann den genannten Raum in Volumenzellen aufzuteilen, deren Anzahl so gewählt wird, dass jede Zelle eine Anzahl von Knotenpunkten des genannten Volumennetzwerks umfasst, die im Wesentlichen gleich der Anzahl der Knotenpunkte der anderen Zellen ist, wobei jede Zelle, die die genannte Außenoberfläche schneidet, wenigstens einen Knotenpunkt umfasst, und schließlich, in Multipletts bzw. Bytes die Koordinaten jedes Knotenpunkts mit Bezug auf die Zelle zu speichern, die ihn umgibt.

**30.** Vorrichtung nach Anspruch 29, **dadurch gekennzeichnet, dass** der genannte Kollisionsdetektionsmodul (18) fähig ist, das Vorhandensein eines Werkzeugpunkts in dem genannten Raum durch einen Vergleich zwischen den genannten Multipletts bzw. Bytes und den Koordinaten des genannten Punkts und dann die Volumenzelle des genannten Raums, in dem sich der genannte Punkt befindet, festzustellen.

**31.** Vorrichtung nach Anspruch 30, **dadurch gekennzeichnet, dass** der genannte Kollisionsdetektionsmodul (18) fähig ist, den Abstand festzustellen, der den genannten Punkt von dem oder den genannten, in der genannten Volumenzelle eingeschlossenen Knotenpunkten trennt, um den kleinsten dieser Abstände zu bestimmen, Minimalabstand genannt, dann den Abstand zu bestimmen, der den genannten Punkt von dem oder den genannten umschlossenen Knotenpunkten in einer festgelegten Anzahl von Volumenzellen trennt, die der Volumenzelle benachbart sind, in der er sich befindet, um diese Abstände mit dem genannten Minimalabstand zu vergleichen, dann die Gesamtheit der Oberflächenmaschen zu bestimmen, die dem Knotenpunkt benachbart sind, der dem genannten Minimalabstand zugeordnet ist, um festzustellen, ob ein Segment, definiert durch die genannte Position des Werkzeugpunkts und durch seine vorhergehende Position, wenigstens eine dieser benachbarten Oberflächenmaschen schneidet, was ermöglicht, die (Schwerpunkt-) Koordinaten des Kollisionspunkts zwischen dem genannten Objekt und dem genannten Werkzeug im Hinblick auf ihre Übertragung zum genannten Interne-Kräfte-Modul (16) zu berechnen.

**32.** Vorrichtung nach Anspruch 31, **dadurch gekennzeichnet, dass** der Kollisionsdetektionsmodul (18) fähig ist, den Inhalt der genannten Multipletts bzw. Bytes zwischen zwei Feststellungen einer Präsenz von Punkten im Innern der genannten Volumenzellen im Falle der Detektion einer Verformung durch den genannten Interne-Kräfte-Modul (16) zu modifizieren.

**33.** Vorrichtung nach einem der Ansprüche 1 bis 32, **dadurch gekennzeichnet, dass** die Benutzer-Schnittstelle (4) eine manuelle Betätigungseinrichtung (5) umfasst, die mit wenigstens einer Hand des Operators bedient werden kann, um die Bewegungen des genannten Werkzeugs zu simulieren.

**34.** Vorrichtung nach einem der Ansprüche 1 bis 33, **dadurch gekennzeichnet, dass** sie Anzeigeeinrichtungen (3) umfasst, gekoppelt mit dem Auffrischungsmodul (17), um in Echtzeit in Form eines Bildes wenigstens die Bilddaten des Objekts und eine Darstellung des Werkzeugs anzuzeigen.

**35.** Vorrichtung nach einem der Ansprüche 1 bis 34, **dadurch gekennzeichnet, dass** der Bilddaten-Satz ein dreidimensionales digitales Bild eines Bereichs darstellt, der wenigstens ein 3D-Objekts umfasst, darunter das bezeichnete Objekt.

**36.** Vorrichtung nach Anspruch 35, **dadurch gekennzeichnet, dass** das digitale Bild ein medizinisches Bild ist.

**37.** Elektronisches Bildverarbeitungsverfahren des die folgenden Schritte umfassenden Typs:

- Vorsehen einer Benutzer-Schnittstelle (4), fähig eine Kraftrückleitung zu erzeugen, entsprechend den Reaktionen eines Werkzeugs (6, 7),
- Erstellen - aufgrund eines Verformungsgesetzes und einer Aktion, definiert durch die Benutzer-Schnittstelle (4) und repräsentativ für ein Manöver des genannten Werkzeugs -, eines Interne-Kräfte-Feldes zwischen Knotenpunkten eines Volumennetzwerks, Funktion eines Oberflächennetzwerks eines in einem Bilddatensatz erscheinenden 3D-Objekts,
- Bestimmen der Reaktionskraft des Objekts, die seiner aufgrund der internen Kräfte berechneten Verformung entspricht, so dass die durch die Benutzer-Schnittstelle (4) erzeugte Kraft im Wesentlichen ausgeglichen wird durch diese Reaktionskraft,
- Berechnen der neuen Bilddaten des Objekts angesichts der geschätzten bzw. berechneten Verformungen, vervollständigt durch die Darstellung des genannten Werkzeugs,

**dadurch gekennzeichnet, dass** man einen Schritt vorsieht, in dem man einen Schnittpunkt zwischen einer Geraden, die eine Verschiebung materialisiert, abgeleitet von der genannten definierten Aktion, und dem genannten Oberflächennetzwerk berechnet, und dadurch, dass man die interne Kraft, ausgeübt auf die Knotenpunkte wenigstens eines ersten Teils des Volumennetzwerks des Objekts, aufgrund der erfolgten Verschiebung der Knotenpunkte berechnet, die zu der Oberflächenmasche gehören, die den genannten Schnittpunkt enthält, von Grenzwerten, und von Knotenpunkttensoren und Verbindungstensoren jeweils für jeden Knotenpunkt und jede Verbindung wenigstens dieses ersten Teils, von Steifheitsmatrizen, charakteristisch für jede Volumenmasche wenigstens des genannten ersten Teils und Funktion des Verformungsgesetzes.

FIG.1

LIE

FORCES
(Fx,Fy,Fz)

500 Hz

4

POSITIONS
(x,y,z)

BUS ISA

MEMOIRE
PARTAGEE

RESEAU

POSITIONS
(x,y,z)

RESEAU

DETECTION DE
COLLISIONS

18

CALCUL
FORCES
INTERNES

16

2

CALCUL
DEFORMATION

17

1

CALCUL DES
FORCES

20

FIG.2

STATION GRAPHIQUE

UNITE DE CONTROLE

POINT FIXE

FIG.3

FIG.4

FIG.5

FIG.6

FIG.7

FIG.8

FIG.9

FIG.10

FIG.11

FIG.12

FIG.13

19

FIG.14

INTERACTIONS

MAILLAGE $\mathcal{M}_1$

CDL = FORCES AUX
NŒUDS DE CONNEXION

CDL = DEPLACEMENTS DES
NŒUDS DE CONNEXION

MAILLAGE $\mathcal{M}_2$

INTERACTIONS

FIG.15

FIG.16

FIG.17

FIG.18